# EUROPEAN PATENT APPLICATION

(11) **EP 4 120 741 A1**
(43) Date of publication of application: **18.01.2023**
(21) Application number: 22183320.5
(22) Date of filing: 06.07.2022
(51) Int. Cl.: H04W 36/00, H04L 5/00

(54) **CONTROLLING SECONDARY CELL GROUP ADDITION AND RELEASE**

(30) Priority: 15.07.2021 US 202117377229
(71) Applicant: Apple Inc., Cupertino, CA 95014 (US)
(72) Inventor: NICKISCH, Dirk, Munich (DE); SAMBHWANI, Sharad, San Diego (US)
(74) Representative: COPA Copenhagen Patents

(57) **Abstract**

Performing autonomous measurements at a user equipment (UE) may include encoding a radio resource control (RRC) connection request for transmission to a first base station having a first base station type. An RRC connection setup communication received from the first base station may be decoded. Measurements associated with a set of candidate carriers of a second base station type may be autonomously performed while in an RRC connected state. Autonomously performing the measurements may including deriving the set of candidate carriers to be measured. Results from the performed measurements may be stored.

## Description

### TECHNICAL FIELD

This application relates generally to wireless communication systems, including radio communication devices and methods for controlling the addition of a Secondary Cell Group (SGC).

### BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi^{®}).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the EUTRAN may also implement NR RAT. In certain deployments, NG-RAN may also implement LTE RAT.

A base station used by a RAN may correspond to that RAN. One example of an EUTRAN base station is an Evolved Universal Terrestrial Radio Access Network (EUTRAN) Node B (also commonly denoted as evolved Node B, enhanced Node B, eNodeB, or eNB). One example of an NG-RAN base station is a next generation Node B (also sometimes referred to as a or g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

Frequency bands for 5G NR may be separated into two or more different frequency ranges. For example, Frequency Range 1 (FR1) may include frequency bands operating in sub-6 GHz frequencies, some of which are bands that may be used by previous standards, and may potentially be extended to cover new spectrum offerings from 410 MHz to 7125 MHz. Frequency Range 2 (FR2) may include frequency bands from 24.25 GHz to 52.6 GHz. Bands in the millimeter wave (mmWave) range of FR2 may have smaller coverage but potentially higher available bandwidth than bands in the FR1. Skilled persons will recognize these frequency ranges, which are provided by way of example, may change from time to time or from region to region.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a data flowchart of ENDC signaling in accordance with one embodiment.
FIG. 2 illustrates a data flowchart of signaling associated with triggering an ENDC setup in accordance with one embodiment.
FIG. 3 illustrates a data flowchart of an ENDC release procedure in accordance with one embodiment.
FIG. 4 illustrates a data flowchart of autonomous IRAT NR measurements and NR measurement result reporting in accordance with one embodiment.
FIG. 5 illustrates a timeline of ENDC signaling in accordance with one embodiment.
FIG. 6 illustrates a data flowchart of ENDC signaling in accordance with one embodiment.
FIG. 7 illustrates a data flowchart of ENDC signaling in accordance with one embodiment.
FIG. 8 illustrates a data flowchart of NRDC signaling in accordance with one embodiment.
FIG. 9 illustrates a data flowchart of NRDC signaling in accordance with one embodiment.
FIG. 10 illustrates a data flowchart of NRDC signaling in accordance with one embodiment.
FIG. 11 illustrates a data flowchart of NRDC signaling in accordance with one embodiment.
FIG. 12 illustrates a data flowchart of NRDC signaling in accordance with one embodiment.
FIG. 13 illustrates a data flowchart of NRDC signaling in accordance with one embodiment.
FIG. 14 illustrates a state transition chart for maintaining a carrier list in accordance with one embodiment.
FIG. 15 illustrates a data flowchart for maintaining a carrier list during mobility in accordance with one embodiment.
FIG. 16 illustrates a communication device in accordance with one embodiment.
FIG. 17 illustrates a flowchart of a method for performing autonomous measurements in accordance with one embodiment.
FIG. 18 illustrates an example architecture of a wireless communication system, according to embodiments disclosed herein.
FIG. 19 illustrates a system for performing signaling between a wireless device and a network device, according to embodiments disclosed herein.
FIG. 20 illustrates an EN-DC architecture according to embodiments herein.

### DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

The principles described herein relate to radio communication devices for controlling the addition of a Secondary Cell Group (SGC) based on current use case or scenario of a device. Today's technology provides methods to aggregate multiple cells of different carrier frequencies to one cell group and use the aggregated bandwidth for user data transmission between the communication device and the network. Accordingly, such a communication device can be connected to two different cell groups at the same time. The two cell groups may belong to the same or different Radio Access Technologies (RATs). One cell group is considered as Master Cell Group (MCG) and the other cell group as a Secondary Cell Group (SCG). The principles described herein may be practiced with respect to any combination of the below technologies (and to any combinations of future technologies): 1.Master LTE cell group combined with a Secondary LTE cell group (also referred to as LTE Dual Connectivity); 2. Master LTE cell group combined with a Secondary 5G NR cell group (also referred to as Evolved Universal Terrestrial Radio Access (EUTRA) NR dual connectivity (ENDC)); 3. Master 5G NR cell group combined with a Secondary 5G NR cell group (also referred to as NR dual connectivity (NRDC)); 4. Master 5G NR cell group combined with a Secondary LTE cell group (also referred to as NR EUTRA dual connectivity (NEDC)); 5. Any combination of LTE or 5G NR with future technologies; and 6. Any combination of Carrier Aggregation and Dual Connectivity.

The principles described herein also include a method for allowing the communication device (e.g., a UE) to signal to a network if the addition of an SCG is to occur or if the communication device is to connect to the MCG only. In addition, the signaling described herein allows the device to provide a preferred configuration for the SCG. Such preferred configuration may include information related to a balance between maximum achievable data throughput and reduced throughput for power consumption reduction. For instance, such information may include: 1. A maximum number of downlink (DL) and uplink (UL) carrier frequencies to be aggregated within the SCG; 2. A maximum aggregated bandwidth for DL and UL data transfer; 3. A maximum number of multiple-input and multiple-output (MIMO) layers for DL and UL data transfer; 4. A maximum bandwidth part (BWP) for DL and UL data transfer; 5. A UE preferred discontinuous reception (DRX) configuration; and so forth.

When an ENDC capable UE moves to LTE Connected mode, an eNB will setup ENDC (LTE+NR). Even though only a small amount of data is to be transmitted and, in reality, no ENDC is needed, an ENDC may be used in such situations, which consumes large amounts of power on the UE side and large amounts of resources on the network side. In particular, a lot of control signaling overhead occurs when adding an NR SCG, despite not much user data being transferred. Currently, there is no method in place to control entering ENDC based on UE data transmission needs. The same issue also exists for NR to enter NRDC or NEDC (or even to remain in MCG-only operation). In an example, these issues may occur when a phone is in an individual's pocket and performing background traffic. In another example, these issues may occur when a user of a mobile device is only using an application that performs small amounts of data traffic (e.g., texting).

Accordingly, today's technology does not provide a method for a communication device to control the addition of the SCG. Instead, a communication device may merely signal its preferences after the SCG has been added to the device connection. The device may not be able to communicate to the network regarding the SCG being added to the connection for the purpose of high throughput data transfer or regarding the UE preferring to remain connected solely to the MCG. The UE may prefer an MCG-only connection for multiple reasons, including, but not limited to: 1. Power saving purposes; 2. Scenarios where a small amount of data is to be transferred; and 3. Scenarios where the relevant data transfer comprises a background data transfer (i.e., the relevant data transfer is not caused by user interaction - for example, the relevant data transfer is related to periodically transmitting or receiving small amounts of data to enable push services for mail/messages).

As such, signaling may be introduced to indicate a UE's desire for entering ENDC. More specifically, such novel signaling may occur between a UE and an eNB to indicate that the UE desires to use ENDC for a given purpose or that an LTE-only connection is sufficient for the UE. For instance, during LTE Connection Setup, a UE may indicate to the network that currently only a small data transfer is to occur and as such, the network/eNB can keep the UE in an LTE-only connection (i.e., rather than setting-up ENDC). When a situation rises in which the UE desires ENDC for larger data transfer, the UE may then indicate such to the network. The network may then setup ENDC in response. During an LTE only call, the UE may autonomously perform inter radio access technology (IRAT) NR measurements (no IRAT NR measurement configuration received from network) to prepare for potential NR measurement reporting prior to an ENDC addition.

IRAT NR measurements during LTE connected mode, in particular, are further discussed in RAN2: 38.306 CR0037; RP-182651, titled "Clarification to UE capability of independentGapConfig for inter-RAT NR measurement not yet configured with EN-DC," which defines independentGapConfig as "This field indicates whether the UE supports two independent measurement gap configurations for FR1 and FR2 specified in TS 38.133 [5]. The field also indicates whether the UE supports the FR2 inter-RAT measurement without gaps when EN-DC is not configured."

The assumptions below may also apply to the solutions proposed herein: 1. The UE and network support the following 3GPP Release 16 (Rel-16) features: a. Dual Carrier and Carrier Aggregation Enhancements (DC_CA), including: i. NR Idle Mode Measurement configuration; and ii. UE Information Request/Response procedure to report NR Idle mode results; and b. UE NR Power Saving enhancements, including: i. UE Assistance Information procedure to report UE power saving preference; and 2. The UE supports a mechanism to derive situations where ENDC operation has to occur (details of such mechanism may be UE-specific).

The proposed solutions may include the following two parts: 1. ENDC signaling to indicate the desire for ENDC, including: a. Triggering a 5G NR addition or keeping the UE in LTE-only mode; and b. Determining the suitability of ENDC based on a UE evaluation mechanism; and 2. Autonomous IRAT NR measurements and NR measurement result reporting using ENDC signaling. Such measurements and reporting may assist in the ENDC addition procedure outlined in the first part of the solution discussed above (i.e., signaling associated with ENDC). In addition, these measurements and reporting may help to quickly provide NR measurement results for a fast ENDC addition when applicable.

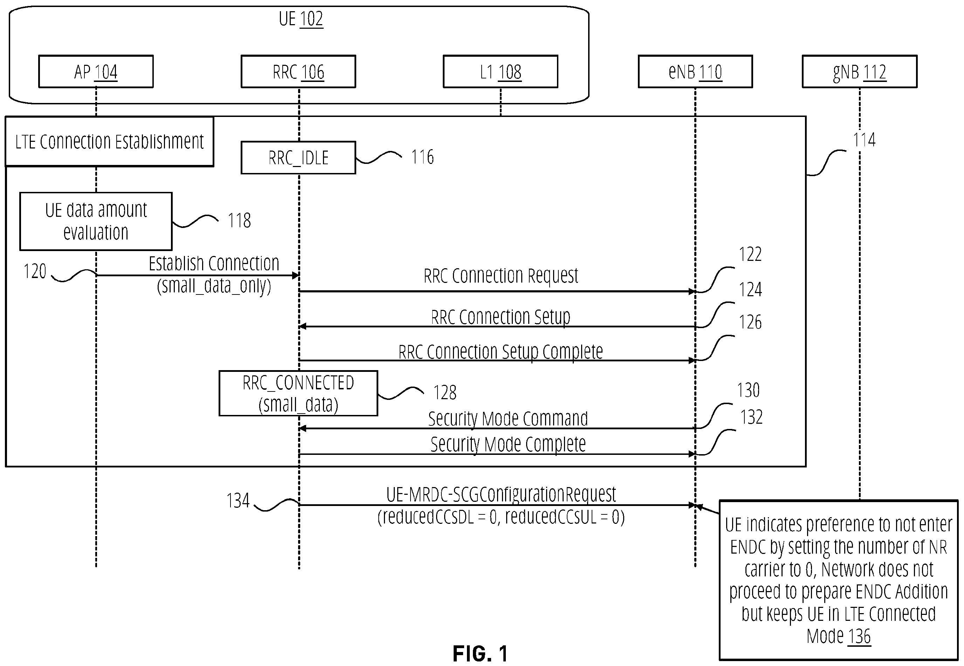

FIG. 1 illustrates an example data flowchart of the ENDC signaling described above when used for avoiding entering ENDC. As shown, FIG. 1 includes a UE 102, which includes an access point 104 (AP 104), radio resource control 106 (RRC 106), and Layer 1 108 (L1 108), as well as an eNB 110 and a gNB 112. As shown, the signaling of FIG. 1 may include an LTE connection establishment (as represented by block 114), which may include the RRC 106 initially being in an idle state as represented by block 116. A UE data amount evaluation may then occur at the AP 104 at some point (as represented by block 118), followed by a connection establishment message (corresponding to small data) from the AP 104 to the RRC 106 (as represented by arrow 120). A series of RRC connection messages may then be communicated via RRC 106 between the UE 102 and the eNB 110 (as represented by arrow 122, arrow 124, arrow 126, and block 128). Finally, the LTE connection establishment may include security mode communications via RRC 106 between the UE 102 and the eNB 110 (as represented by arrow 130 and arrow 132). Once the LTE connection establishment is complete, via RRC 106, the UE 102 may send a UE-MRDCSCGConfigurationRequest to the eNB 110, which may indicate a preference of the UE 102 to not enter Evolved-Universal Terrestrial Radio Access Dual Connectivity (ENDC) by setting a number of NR carriers to zero (as represented by block 136).

Accordingly, the ENDC signaling to indicate the suitability/desire of utilizing ENDC may include avoiding entering ENDC using a UE-MRDC-SCGConfigurationRequest that is sent by the UE after the LTE connection establishment and RRC security activation (represented in block 114). The UE-MRDC-SCGConfigurationRequest may set the number of reduced component carrier (CC) to a value of zero for UL and DL, and may be transmitted in EUTRA signaling radio bearer 1 (SRB1). An EUTRAN may receive the UE-MRDC-SCGConfigurationRequest, detect the UE's preference of zero NR carrier, and refrain from triggering an NR SCG addition or any procedures to prepare an SCG addition (e.g., refraining from setting up any IRAT NR measurements).

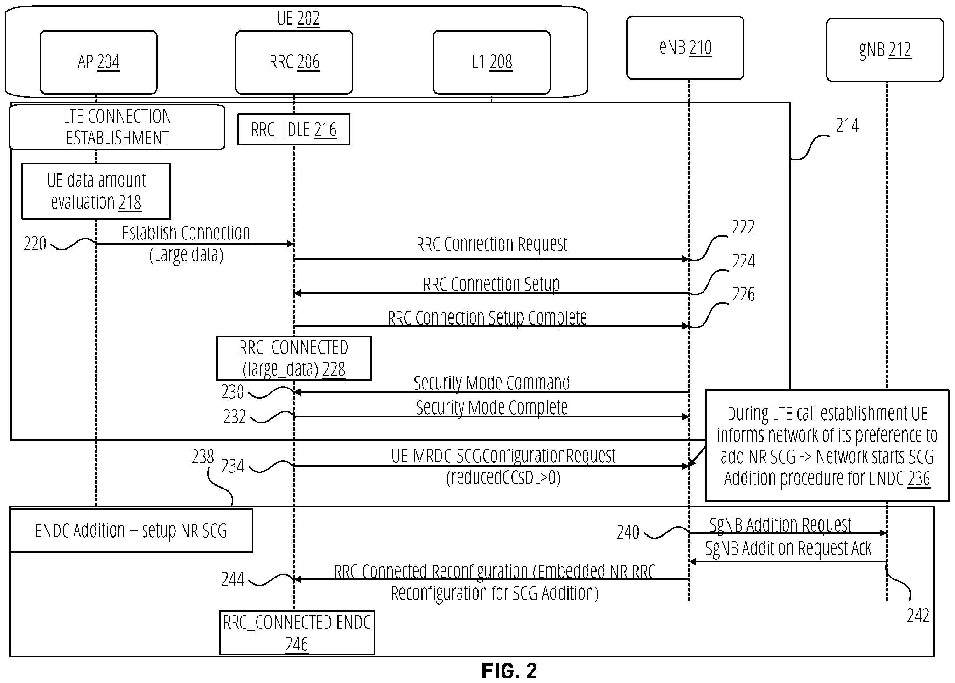

In contrast, FIG. 2 illustrates a data flowchart of signaling associated with triggering an ENDC setup. As shown, FIG. 2 includes a UE 202, which includes an access point 204 (AP 204), radio resource control 206 (RRC 206), and Layer 1 208 (L1 208), as well as an eNB 210 and a gNB 212. The signaling of FIG. 2 may include an LTE connection establishment (as represented by block 214), which may include the RRC 206 initially being in an idle state as represented by block 216. Notably, triggering an ENDC setup may be particularly applicable when a UE is transmitting a large amount of data upon LTE Connection Establishment. As such, a UE data amount evaluation may then occur at the AP 204 at some point (as represented by block 218), followed by a connection establishment message (corresponding to large data) from the AP 204 to the RRC 206 (as represented by arrow 220). A series of RRC connection messages may then be communicated via RRC 206 between the UE 202 and the eNB 210 (as represented by arrow 222, arrow 224, arrow 226, and block 228). Finally, the LTE connection establishment may include security mode communications via RRC 206 between the UE 202 and the eNB 210 (as represented by arrow 230 and arrow 232).

Once the LTE connection establishment is complete, via RRC 206, the UE 202 may send a UE-MRDC-SCGConfigurationRequest to the eNB 210 (as represented by arrow 234), which may indicate a preference of the UE 202 to enter Evolved-Universal Terrestrial Radio Access Dual Connectivity (ENDC) by setting a number of aggregated DL carriers equal to a value other than zero (i.e., greater than zero), as represented by block 236. The ENDC addition setup (as represented by block 238) may then include the eNB 210 triggering the SCG addition to the NR node (i.e., the gNB 212) by sending an SgNB addition request (as represented by arrow 240). The gNB 212 may then send an acknowledgment of such, as represented by arrow 242. The eNB 210 may then send an RRC connection reconfiguration communication via RRC 206 to the UE 202 (as represented by arrow 244), which may culminate in an RRC-connected ENDC state (as represented by block 246).

Accordingly, with respect to the signaling associated with indicating a preference to enter ENDC, the UE may: 1. Set a number of aggregated DL carriers equal to a value greater than zero; 2. Include IRAT NR measurement results, if available; and 3. Transmit the UE-MRDC-SCGConfigurationRequest message over LTE SRB1. Similarly, with respect to the EUTRAN receiving the UE-MRDC-SCGReconfigurationRequest message, the EUTRAN may: 1. Detect the UE's preference for NR carriers to be setup; 2. Trigger an NR SCG addition procedure; and 3. Utilize reported IRAT NR measurement results (i.e., when reported) to select correct cells for SCG PSCells and SCells.

An ENDC Release based on 3GPP Release 16 (Rel-16) NR UE Assistance Information (UAI) may also be utilized. Notably, the procedure described with respect to 3GPP TS 38.331 CR 1469; R2-2002389 may include the following: 1. The UE indicating a preference to release NR SCG by setting the number of DL and UL carriers and the number of DL and UL aggregated bandwidth for FR1 and FR2 as zero within a UAI message; 2. The UAI message being transmitted over LTE SRB1 embedded in a ULInformationTransferMRDC message and an MN forwarding the message to an SN; 3. The UE sending UAI using SRB3 to directly inform the SN, if SRB3 is configured; and/or 4. The SN initiating an SCG release procedure upon detecting a UE preference for zero carrier/zero bandwidth.

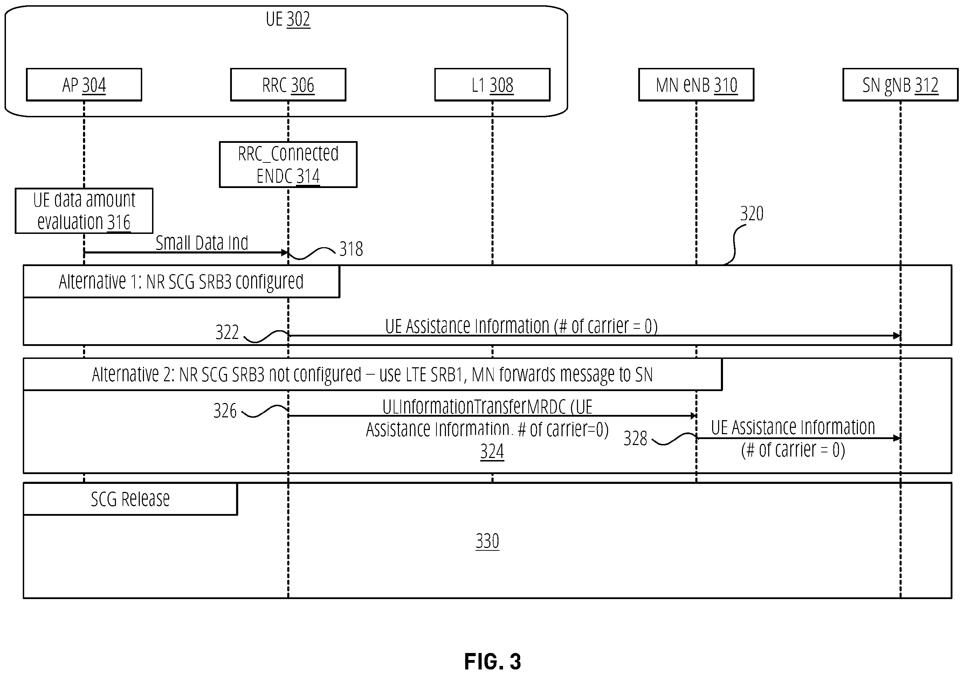

Accordingly, FIG. 3 illustrates an example data flowchart of an ENDC release procedure using Rel-16 UAI. As shown, FIG. 3 includes a UE 302, which includes an access point 304 (AP 304), radio resource control 306 (RRC 306), and Layer 1 308 (L1 308), as well as an MN eNB 310 and an SN gNB 312. In such embodiments, the UE may already be in an RRC-connected ENDC state, as represented by block 314. A UE data amount evaluation may then occur at the AP 304 at some point (as represented by block 316), followed by a small data indication from the AP 304 to the RRC 306 (as represented by arrow 318).

UAI may then be used by the UE 302 to inform the network of the UE's preference to release the NR SCG using various options. In a first option (as represented by block 320), the UE may send a UAI message indicating the preference to release the SCG directly to the SN gNB 312 (as represented by arrow 322). Such procedure may be executed as defined by 3GPP Rel-16 NR UE power saving enhancement (38.331 CR 1469; R2-2002389). In a second option (as represented by block 324), the UE may send a ULInformationTransferMRDC message including UAI to the MN eNB 310 to indicate the UE's release preference (as represented by arrow 326). The MN eNB 310 may then forward such message on to the SN gNB 312, as represented by arrow 328). Regardless of whether the first or second option is utilized, the UE may indicate its release preference by setting the number of preferred DL and UL carriers to zero. The SCG release may then be performed, as represented by block 330.

Autonomous IRAT NR measurements and NR measurement result reporting using an UE-MRDC- SCGConfigurationRequest message may also be utilized, as further described herein. Such measurements and measurement reporting may include a UE in LTE connected mode performing gapless IRAT NR measurements, including: 1. The UE using an NR carrier list derived from multiple sources, as further described herein; 2. The UE autonomously using LTE connected mode discontinuous reception (CDRX) gaps for IRAT NR measurement; and 3. The UE using second RX chain (RX2) to measure IRAT NR in parallel to LTE RX+TX and applying TX blanking in case LTE TX conflicts with RX2 used for NR.

When ENDC setup is to be performed and the UE sends a UE-MRDCSCGConfigurationRequest message, the UE may include NR measurement results. The network may use the NR measurement results to select the NR PSCell and SCells to be added for ENDC operation. In cases where the UE is not able to perform autonomous NR measurements, the UE may not report results in the UE-MRDC- SCGConfigurationRequest. In such cases, the eNB may setup IRAT NR measurements using a MeasObject and report using ReportConfig to derive results (when such results are to be used for an NR SCG addition).

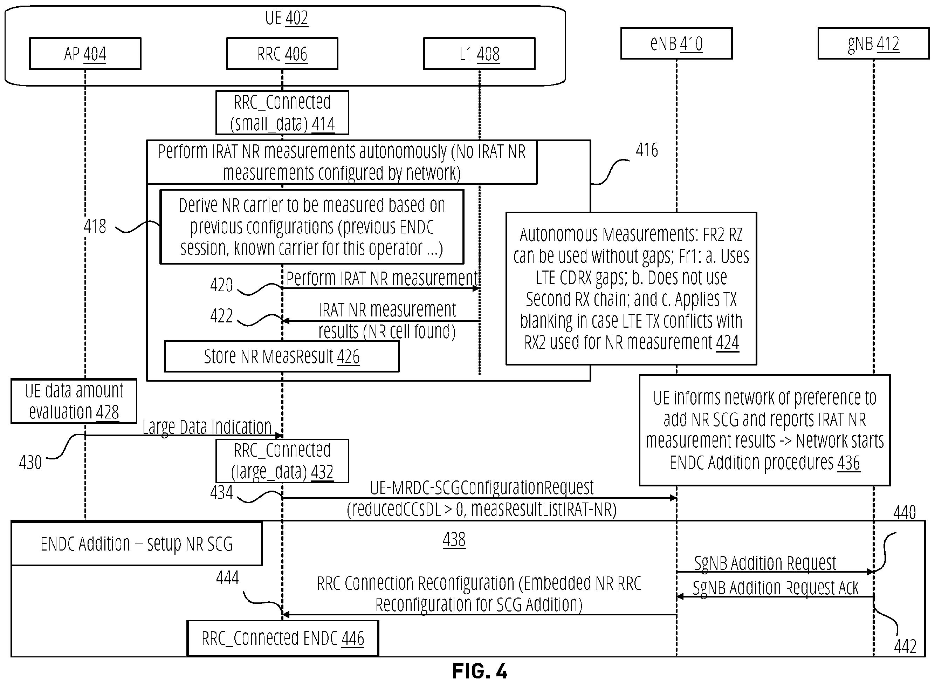

FIG. 4 illustrates a data flowchart of autonomous IRAT NR measurements and NR measurement result reporting using an UE-MRDC- SCGConfigurationRequest message. As illustrated, FIG. 4 includes a UE 402, which includes an access point 404 (AP 404), radio resource control 406 (RRC 406), and Layer 1 408 (L1 408), as well as an eNB 410 and a gNB 412. While the UE 402 is in an RRC-connected state with respect to small data transmissions (as represented by block 414), IRAT NR measurements may be performed autonomously by the UE 402 (as represented by block 416). Such autonomous measurements may include deriving an NR carrier to be measured based on previous configurations (e.g., previous ENDC session(s), known carriers for a given operator, and so forth), as represented by block 418. IRAT NR measurements and results may then be performed/communicated via RRC 406 and L1 408 (as represented by arrow 420 and arrow 422, respectively). With respect to the autonomous measurements, as shown in block 424: 1. FR2 RZ may be used without gaps; and 2. FR1 may: a. Use LTE CDRX gaps; b. Not use second RX chain; and c. Apply TX blanking in case LTE TX conflicts with RX2 used for NR measurements. Measurements may then be stored, as represented by block 426.

An evaluation of the amount of data may then be performed at the AP 404 (as represented by block 428), which may comprise a large amount of data (as represented by arrow 430) and result in an RRC-connected state associated with large data at the UE (as represented by block 432). The UE 402 may then send a UE-MRDCSCGConfigurationRequest and inform the network of its preference to add NR SCG, as well as reporting IRAT NR measurement results (as represented by arrow 434 and block 436).

The network may then start ENDC addition procedures, as shown in block 438. Such procedures may include the eNB 410 sending an SgNB addition request and the gNB 412 acknowledging the request (as represented by arrow 440 and arrow 442, respectively). The eNB 410 may then send an RRC connection reconfiguration with an embedded NR RRC reconfiguration for the SCG addition (as represented by arrow 444), resulting in an RRC-connected ENDC state (as represented by block 446).

Accordingly, FIG. 4 illustrates the following regarding indicating a preference for ENDC and autonomous measurements by the UE: 1. The UE may have previously preferred LTE only and no NR SCG is configured; 2. The UE may perform autonomous IRAT NR measurements to later avoid delay for an ENDC addition; 3. The UE may perform IRAT NR measurements using a network idle mode measurement configuration; and 4. Once a large data application is started and ENDC is preferred, the UE may use a UE-MRDCSCGConfigurationRequest message to request an NR SCG Addition and to transfer NR measurement results.

For instance, the following UE-MRDCSCGConfigurationRequest message example may apply:

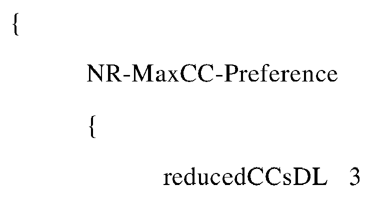

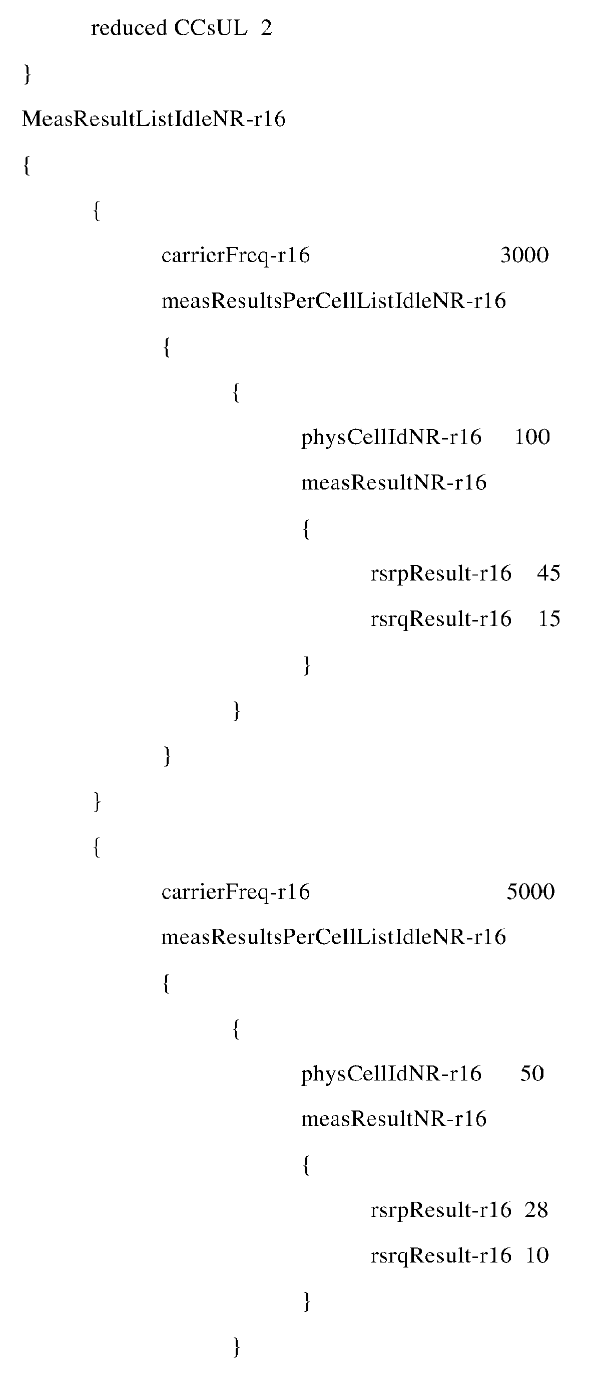

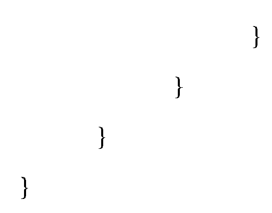

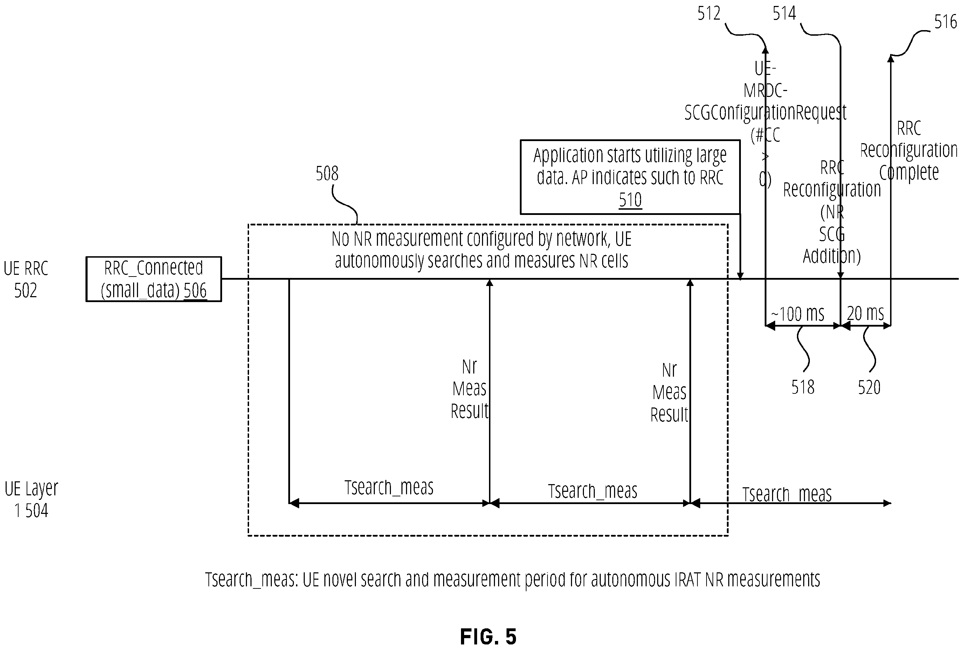

FIG. 5 illustrates a timeline associated with signaling to indicate a preference of ENDC using autonomous NR measurements. As shown, FIG. 5 includes a UE RRC 502 and a UE Layer 1 504. The UE may be in an RRC-connected state (associated with small amounts of data - as represented by block 506) when the UE autonomously searches for and measures NR cells during a novel search and measurement period (as represented by block 508). At some point an application of the UE may start utilizing large amounts of data, which may be communicated from an AP of the UE to the UE RRC 502 (as represented by block 510). A time period 518 of approximately 100 (deleted) milliseconds (ms) may pass between the UE sending a UE-MRDC-SCGConfigurationRequest (as represented by arrow 512) and commencement of an RRC reconfiguration associated with the NR SCG addition (as represented by arrow 514). A time period 520 of 20 ms may then pass between commencement of the RRC reconfiguration associated with the NR SCG addition and the RRC reconfiguration being complete (as represented by arrow 516).

Feature capability signaling may also be utilized with respect to ENDC addition. For instance, in some embodiments, a UE may only send the novel message UE-MRDCSCGConfigurationRequest when the corresponding EUTRA network supports such features. Accordingly, the network may indicate its support of such features. For example, the network may indicate such capabilities in an RRC Connection Setup message. In a particular example, the network may use the following: lateNonCriticalExtension - OCTET STRING - OPTIONAL. In such embodiments, when the OCTET STRING is not included in message, such features may not supported by the network. In contrast when the OCTET STRING includes 1 octet in the message (e.g., value 0x01), such features may be supported by the network. In addition, the UE may signal its support of such features to the network. In an example, the UE may use one of the non-used FGI Bits (note: LTE FGI Rel8 bits 43 to 64 are not used by 3GPP) in a UE Capability Information message as follows using bit #64 as an example: 1. When FGI bit #64 = 0, the feature is not supported by the UE; and 2. When FGI Bit #64 = 1, the feature is supported by the UE.

In an example, an LTE RRC Connection Setup message may include:

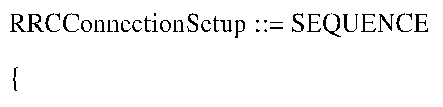

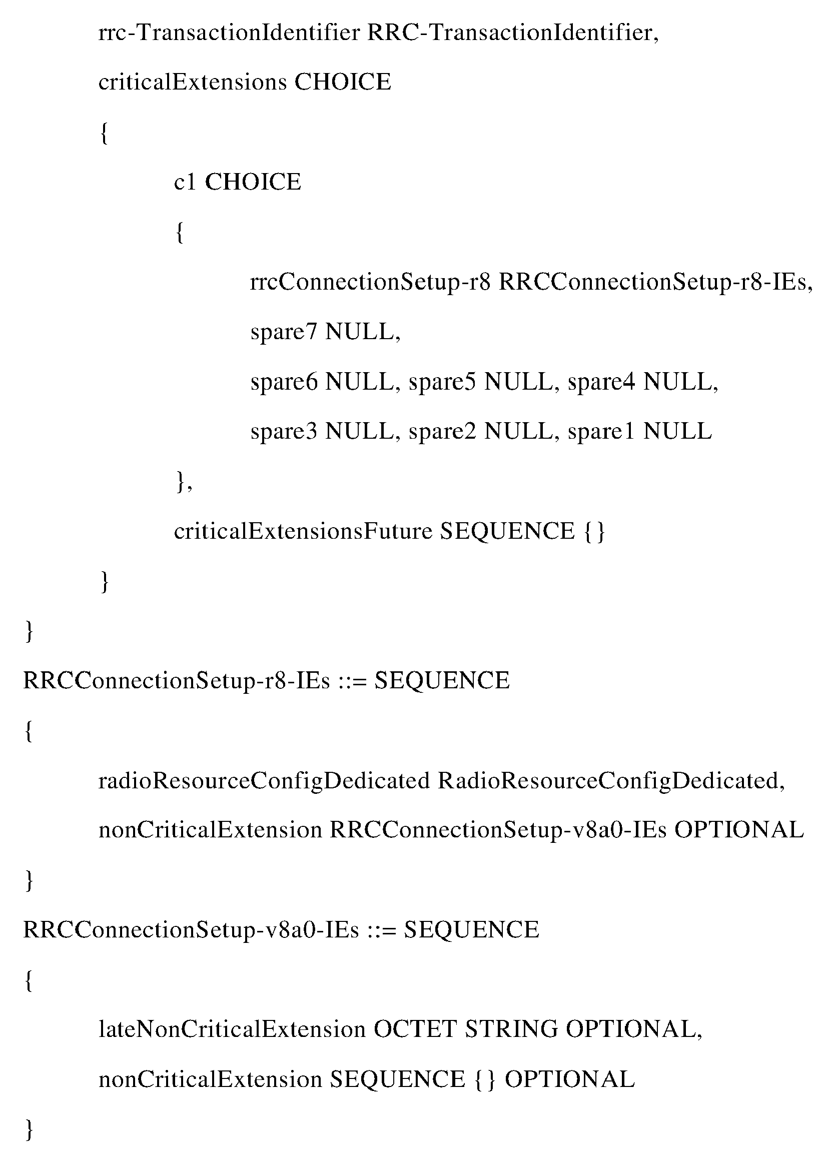

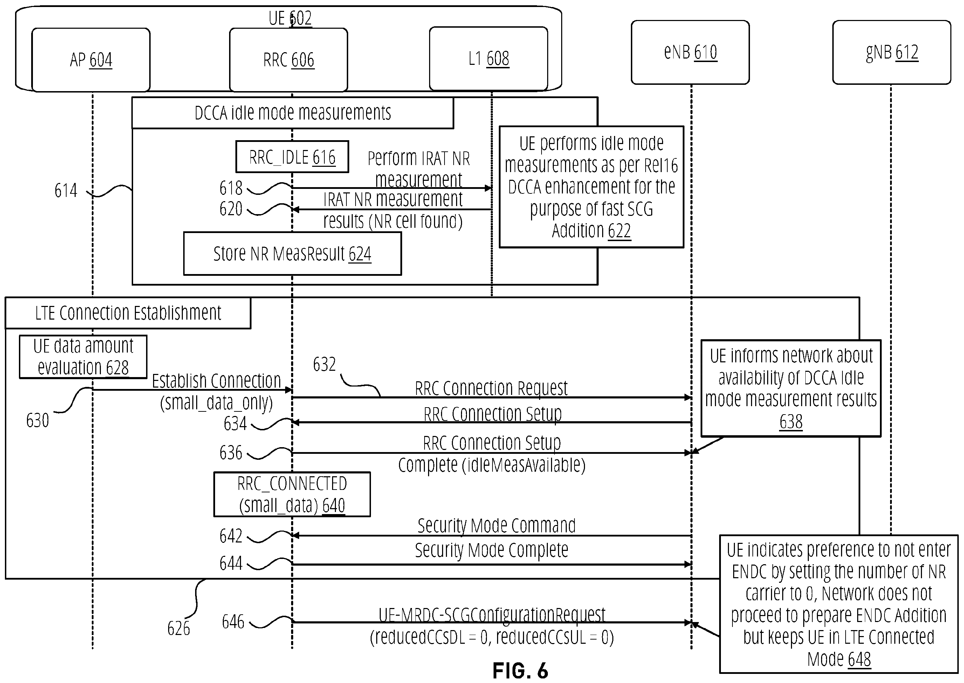

FIG. 6 illustrates a data flowchart using an UE-MRDC- SCGConfigurationRequest message and a DCCA idle mode measurement enhancement. As illustrated, FIG. 6 includes a UE 602, which includes an access point 604 (AP 604), radio resource control 606 (RRC 606), and Layer 1 608 (L1 608), as well as an eNB 610 and a gNB 612. Initially, DCCA idle mode measurements may be performed, as represented by block 614. While the UE 602 is in an RRC-idle state (as represented by block 616), IRAT NR measurements may be performed by the UE 602 (as represented by arrow 618 and arrow 620). In particular, such measurements may be performed in idle mode as further discussed in Rel-16 DCCA enhancement for fast SCG additions (as represented by block 622). In addition, the results of such measurements may be stored, as represented by block 624.

An LTE connection establishment may then be performed, as represented by block 626. As part of such, a UE data amount evaluation may be performed at the AP 604 (as represented by block 628), followed by a connection establishment message (corresponding to small data) from the AP 604 to the RRC 606 (as represented by arrow 630). A series of RRC connection messages may then be communicated via RRC 606 between the UE 602 and the eNB 610 (as represented by arrow 632, arrow 634, arrow 636, and block 640). The RRC connection setup complete message (as represented by arrow 636) may also include information indicating to the eNB 610 of the availability of DCCA idle mode measurement results (as represented by block 638). Finally, the LTE connection establishment may include security mode communications via RRC 606 between the UE 602 and the eNB 610 (as represented by arrow 642 and arrow 644).

Once the LTE connection establishment is complete, via RRC 606, the UE 602 may send a UE-MRDC-SCGConfigurationRequest to the eNB 610 (as represented by arrow 646), which may indicate a preference of the UE 602 to not enter Evolved-Universal Terrestrial Radio Access Dual Connectivity (ENDC) by setting a number of NR carriers equal to zero. In response, the network may keep the UE in LTE connected mode and not prepare an ENDC addition, as represented by block 648.

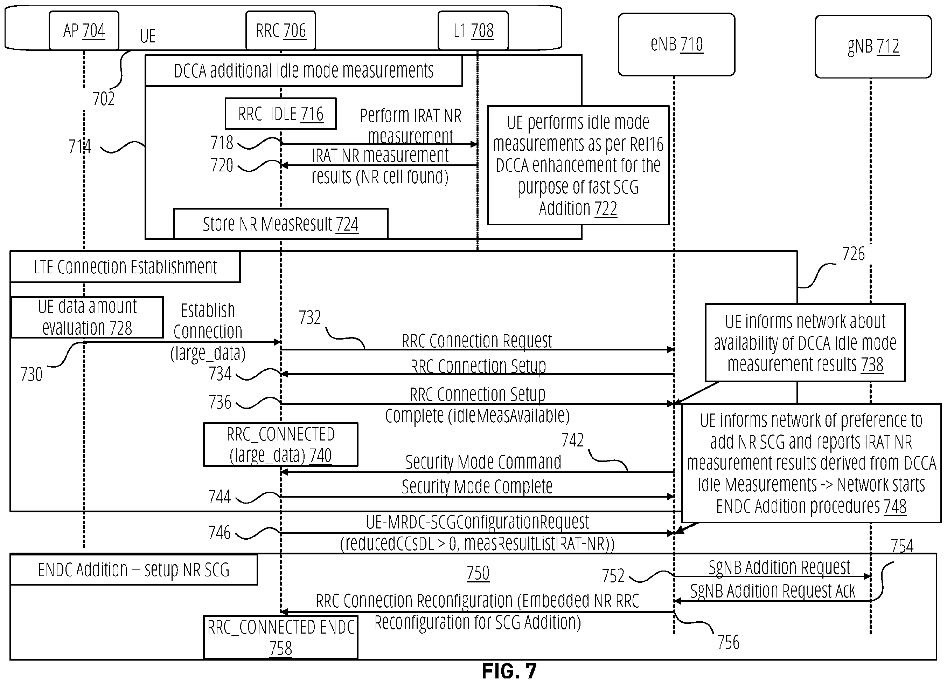

FIG. 7 illustrates a data flowchart using an UE-MRDC- SCGConfigurationRequest message and a DCCA idle mode measurement enhancement. As illustrated, FIG. 7 includes a UE 702, which includes an AP 704, an RRC 706, and an L1 708, as well as an eNB 710 and a gNB 712. Initially, DCCA idle mode measurements may be performed, as represented by block 714. While the UE 702 is in an RRC-idle state (as represented by block 716), IRAT NR measurements may be performed by the UE 702 (as represented by arrow 718 and arrow 720). In particular, such measurements may be performed in idle mode as further discussed in Rel-16 DCCA enhancement for fast SCG additions (as represented by block 722). In addition, the results of such measurements may be stored, as represented by block 724.

An LTE connection establishment may then be performed, as represented by block 726. As part of such, a UE data amount evaluation may be performed at the AP 704 (as represented by block 728), followed by a connection establishment message (corresponding to large data) from the AP 704 to the RRC 706 (as represented by arrow 730). A series of RRC connection messages may then be communicated via RRC 706 between the UE 702 and the eNB 710 (as represented by arrow 732, arrow 734, arrow 736, and block 740). The RRC connection setup complete message (as represented by arrow 736) may also include information indicating to the eNB 710 of the availability of DCCA idle mode measurement results (as represented by block 738). Finally, the LTE connection establishment may include security mode communications via RRC 706 between the UE 702 and the eNB 710 (as represented by arrow 742 and arrow 744).

Once the LTE connection establishment is complete, via RRC 706, the UE 702 may send a UE-MRDC-SCGConfigurationRequest to the eNB 710 (as represented by arrow 746), which may indicate a preference of the UE 702 to enter Evolved-Universal Terrestrial Radio Access Dual Connectivity (ENDC) by setting a number of NR carriers equal to a value more than zero. In response, the network may an ENDC addition, as represented by block 748 and block 750. The ENDC addition may include an SgNB addition request from the eNB 710 (as represented by arrow 752) and an SgNB addition request acknowledgment from the gNB 712 (as represented by arrow 754). The eNB 710 may then send an RRC connection reconfiguration message with an embedded RRC reconfiguration for the SCG addition (as represented by arrow 756), which culminates in an RRC-connected ENDC state (as represented by block 758).

Similar to the ENDC signaling described above, the solutions described herein also include NRDC signaling to indicate a preference for utilizing NRDC. In particular, such NRDC signaling may include: 1. NRDC signaling between a UE and a master node (MN) gNB to indicate when the UE prefers NRDC or when operation using NR MCG only is sufficient; 2. During NR Connection Setup, the UE indicating to the network that a small data transfer is applicable and therefore, the master node (MN) gNB may keep the UE in NR MCG (i.e., refrain from setting up NR SCG); 3. Once the UE prefers NRDC because of a larger data transfer at a later point in time, the UE indicating the preference of NRDC to the network (followed by the network setting up NRDC); 4. While limited to NR MCG operation, the UE autonomously performing NR measurements associated with a candidate SCG NR carrier (i.e., no NR measurement configuration received form network) to prepare NR measurement reporting prior to an NR SCG addition.

With respect to such embodiments, the following assumptions may apply: 1. The UE and the network support the following 3GPP Rel-16 features: a. Dual Carrier and Carrier Aggregation Enhancements (DC_CA), including: i. NR Idle Mode Measurement configurations; and ii. UE Information Request/Response procedures for reporting NR Idle mode results; and b. UE NR Power Saving enhancements, including a UE Assistance Information (UAI) procedure for reporting a UE power saving preference; and 2. The UE supports a mechanism to derive the applicability of an NRDC operation (details of the mechanism may include a UE-specific implementation).

The proposed NRDC solution described herein may include two major parts, comprising: 1. NRDC signaling to indicate a preference of an NR SCG Addition, including: a. Triggering a 5G NR Addition or keeping the UE in NR MCG-only mode; and b. Determining the applicability of NRDC based on a UE evaluation mechanism; and 2. Autonomous NR measurements and NR measurement result reporting using NRDC signaling. These autonomous measurements and reporting may assist the NR SCG addition procedure triggered as part one of this solution and may help to quickly provide NR measurement results for a fast SCG addition.

NRDC signaling to indicate the non-applicability of an NR SCG addition may comprise: 1. Avoiding entering NRDC using a UE-NRDC-SCGConfigurationRequest, including: a. Sending a message after an NR Connection Establishment and RRC Security Activation; b. Setting the number of reduced CC to a value of zero for UL and DL; c. Transmitting the UE-NRDC-SCGConfigurationRequest on NR MCG SRB1; and d. NR MN receiving the UE-NRDC-SCGConfigurationRequest, further including: i. NR MN detecting the UE preference of zero secondary NR carriers; and ii. NR MN not triggering an NR SCG addition or any procedure for preparing an SCG Addition (e.g., not setting up any additional NR measurements).

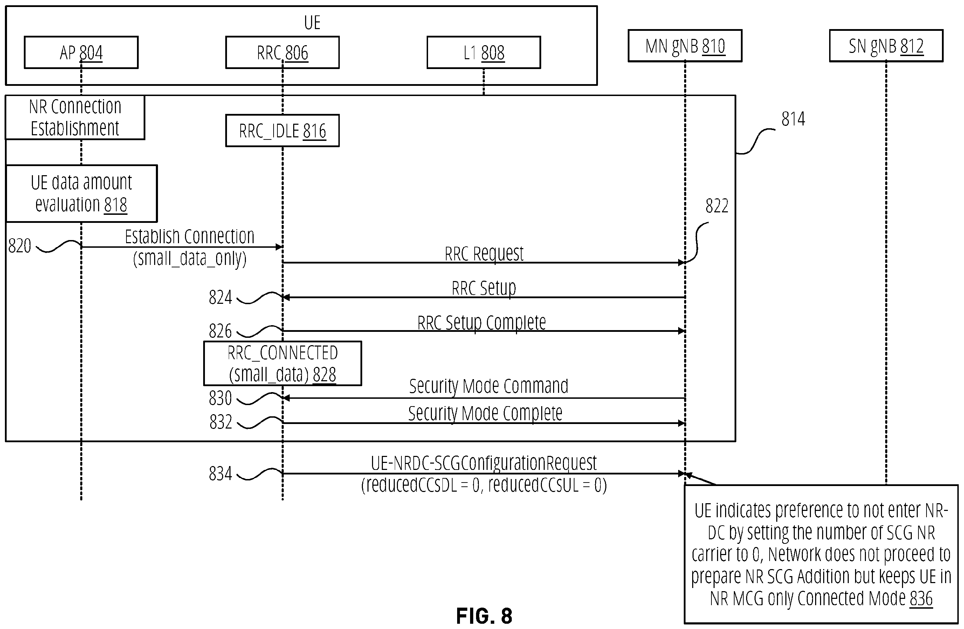

Accordingly, FIG. 8 illustrates a data flowchart for NRDC signaling. As illustrated, FIG. 8 includes a UE 802, which includes an AP 804, an RRC 806, and an L1 808, as well as an MN gNB 810 and a secondary node (SN) gNB (i.e., SN gNB 812). Initially, the UE 802 may perform an NR connection establishment procedure (as represented by block 814) while the UE 802 is in an RRC-idle state (as represented by block 816). As part of such, a UE data amount evaluation may be performed at the AP 804 (as represented by block 818), followed by a connection establishment message (corresponding to small data) from the AP 804 to the RRC 806 (as represented by arrow 820). A series of RRC connection messages may then be communicated via RRC 806 between the UE 802 and the MN gNB 810 (as represented by arrow 822, arrow 824, arrow 826, and block 828). Finally, the NR connection establishment may include security mode communications via RRC 806 between the UE 802 and the MN gNB 810 (as represented by arrow 830 and arrow 832).

Once the NR connection establishment is complete, via RRC 806, the UE 802 may send a UE-NRDC-SCGConfigurationRequest to the MN gNB 810 (as represented by arrow 834), which may indicate a preference of the UE 802 to not enter NRDC by setting a number of NR carriers equal to zero. In response, the network may keep the UE in an NR MCG only connected mode and not prepare an NRDC addition, as represented by block 836.

NRDC signaling to indicate the applicability of an NR SCG addition may comprise: 1. Triggering an NR SCG Setup, including: a. The UE indicating a preference to setup NR SCG by sending a UE-NRDC-SCGReconfigurationRequest message, further including; i. The UE setting the maximum number of aggregated SCG DL carriers to a value greater than zero; ii. The UE including NR measurement results, if available; and iii. The message being transmitted over NR MCG SRB1; b. The NR MN receiving the UE-NRDC-SCGReconfigurationRequest, including: i. The NR MN detecting the UE preference for secondary NR carriers to be setup; ii. The NR MN triggering an NR SCG addition procedure; and iii. The NR MN using reported NR measurement results to select the correct cells for an SCG PSCell and SCells.

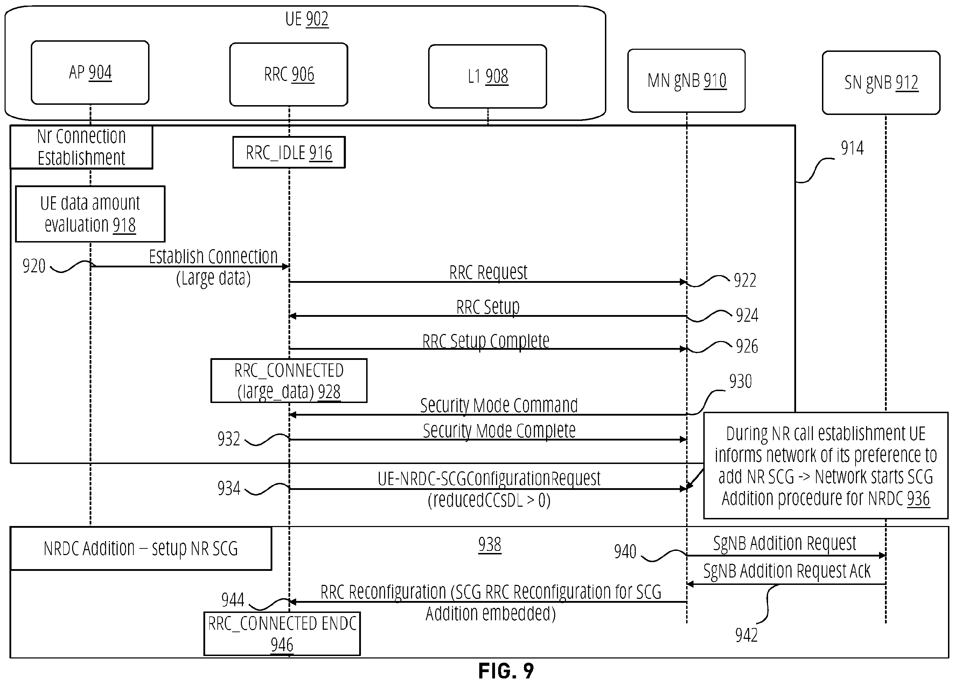

Accordingly, FIG. 9 illustrates a data flowchart for NRDC signaling. As illustrated, FIG. 9 includes a UE 902, which includes an AP 904, an RRC 906, and an L1 908, as well as an MN gNB 910 and an SN gNB 912. Initially, the UE 902 may perform an NR connection establishment procedure (as represented by block 914) while the UE 902 is in an RRC-idle state (as represented by block 916). As part of such, a UE data amount evaluation may be performed at the AP 904 (as represented by block 918), followed by a connection establishment message (corresponding to large data) from the AP 904 to the RRC 906 (as represented by arrow 920). A series of RRC connection messages may then be communicated via RRC 906 between the UE 902 and the MN gNB 910 (as represented by arrow 922, arrow 924, arrow 926, and block 928). Finally, the NR connection establishment may include security mode communications via RRC 906 between the UE 902 and the MN gNB 910 (as represented by arrow 930 and arrow 932).

Once the NR connection establishment is complete, via RRC 906, the UE 902 may send a UE-NRDC-SCGConfigurationRequest to the MN gNB 910 (as represented by arrow 934), which may indicate a preference of the UE 902 to enter NRDC by setting a number of NR carriers equal to a value greater than zero. In response, the network may start an SCG addition procedure for NRDC, as represented by block 936. The NRDC addition procedure (as represented by block 938) may include an SgNB addition request (as represented by arrow 940) by the MN gNB 910 and an acknowledgment by the SN gNB 912 (as represented by arrow 942). An RRC reconfiguration message with an embedded SCG addition may then be sent from the MN gNB 910 to the UE 902 (as represented by arrow 944), resulting in an RRC-connected NRDC state (as represented by block 946).

Releasing NRDC may be based on 3GPP Rel-16 NR UEAssistanceInformation (UAI). In particular, the procedure may be similar to the 3GPP definition in TS 38.331 CR 1469; R2-2002389, as follows: 1. The UE may indicate a preference to release NR SCG by setting the number of DL and UL carriers to zero and the number of Dl and UL aggregated bandwidth for FR1 and FR2 to zero in a UAI message; 2. The UAI message may be transmitted over MCG NR SRB1 embedded in ULInformationTransferMRDC, which is forwarded by the MN to the SN; 3. If SRB3 is configured, the UE can send the UAI message using SRB3 directly informing the SN; and 4. The SN may detect the UE preference for zero carrier/zero bandwidth and initiates an SCG release procedure.

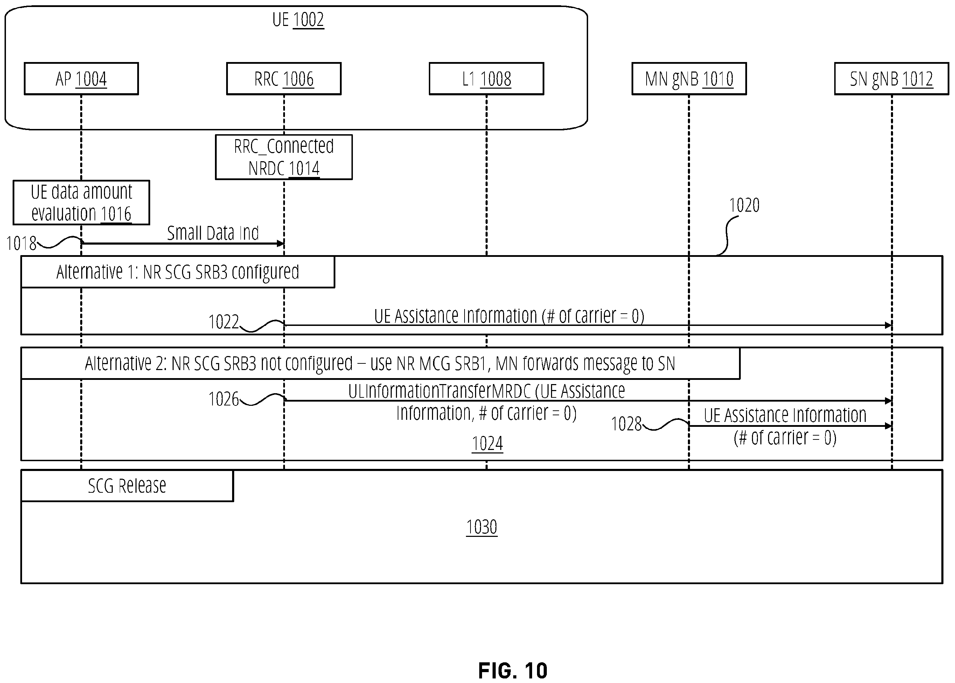

Accordingly, FIG. 10 illustrates an example NRDC release procedure using Rel-16 UAI. As shown, FIG. 10 includes a UE 1002, which includes an AP 1004, an RRC 1006, and an L1 1008, as well as an MN gNB 1010 and an SN gNB 1012. In such embodiments, the UE may already be in an RRC-connected NRDC state, as represented by block 1014. A UE data amount evaluation may then occur at the AP 1004 at some point (as represented by block 1016), followed by a small data indication from the AP 1004 to the RRC 1006 (as represented by arrow 1018).

UAI may then be used by the UE 1002 to inform the network of the UE's preference to release the NR SCG using various options. In a first option (as represented by block 1020), the UE may send a UAI message indicating the preference to release the SCG directly to the SN gNB 1012 (as represented by arrow 1022). Such procedure may be executed as defined by 3GPP Rel-16 NR UE power saving enhancement (38.331 CR 1469; R2-2002389). In a second option (as represented by block 1024), the UE may send a ULInformationTransferMRDC message including UAI to the MN gNB 1010 to indicate the UE's release preference (as represented by arrow 1026). The MN gNB 1010 may then forward such message on to the SN gNB 1012, as represented by arrow 1028). Regardless of whether the first or second option is utilized, the UE may indicate its release preference by setting the number of preferred DL and UL carriers to zero. The SCG release may then be performed, as represented by block 1030.

Autonomous NR measurements and NR measurement result reporting using a UE-NRDCSCGConfigurationRequest message may comprise: 1. A UE in NR-connected mode performing gapless NR measurements, including: a. The UE using an NR carrier list derived from multiple sources, as further described herein; b. The UE autonomously using NR CDRX gaps for IRAT NR measurements; and c. The UE using a second RX chain (RX2) to measure NR in parallel to NR RX+TX and applying TX blanking (like for MSIM) in case NR TX conflicts with the RX2 used for NR measurements; 2. When NRDC setup is required and UE sends UE-NRDC-SCGConfigurationRequest message, the UE including the NR Measurement results in the message; 3. The network using the NR measurement results to select the NR PSCell and SCells to be added for NRDC operation; and 4. In cases where the UE is not able to perform autonomous NR measurements, the UE refraining from reporting results in the UENRDC- SCGConfigurationRequest message. The eNB may then setup NR measurements using a MeasObject and reporting using ReportConfig to derive results, if needed for NR SCG Addition.

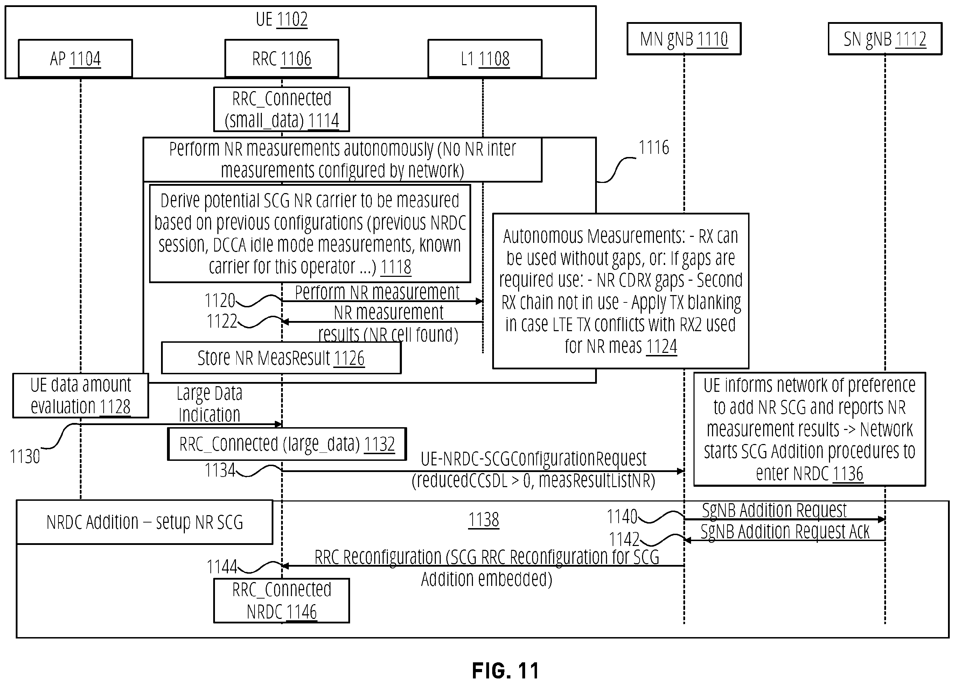

FIG. 11 illustrates autonomous NR measurements and NR measurement result reporting using an UENRDC- SCGConfigurationRequest message. As illustrated, FIG. 11 includes a UE 1102, which includes an AP 1104, an RRC 1106, and an L1 1108, as well as an MN gNB 1110 and an SN gNB 1112. While the UE 1102 is in an RRC-connected state with respect to small data transmissions (as represented by block 1114), NR measurements may be performed autonomously by the UE 1102 (as represented by block 1116). Such autonomous measurements may include deriving potential NR carriers to be measured based on previous configurations (e.g., previous NRDC session(s), DCCA idle mode measurements, known carriers for a given operator, and so forth), as represented by block 1118. NR measurements and results may then be performed/communicated via RRC 1106 and L1 1108 (as represented by arrow 1120 and arrow 1122, respectively). Such autonomous measurements may be performed to avoid future delays associated with an NR SCG addition and may be performed using a network idle mode measurement configuration. With respect to the autonomous measurements, as shown in block 1124: 1. RX may be used without gaps; and 2. If gaps are used: a. No CDRX gaps may be used; b. A second RX chain may not be used; and c. TX blanking may be applied in case LTE TX conflicts with RX2 used for NR measurements. The measurements may then be stored, as represented by block 1126.

An evaluation of the amount of data may then be performed at the AP 1104 (as represented by block 1128), which may comprise a large amount of data (as represented by arrow 1130) and result in an RRC-connected state associated with large data at the UE (as represented by block 1132). The UE 1102 may then send a UE-NRDC-SCGConfigurationRequest and inform the network of its preference to add an NR SCG, as well as reporting NR measurement results (as represented by arrow 1134 and block 1136).

The network may then start NRDC addition procedures, as shown in block 1138. Such procedures may include the MN gNB 1110 sending an SgNB addition request and the SN gNB 1112 acknowledging the request (as represented by arrow 1140 and arrow 1142, respectively). The MN gNB 1110 may then send an RRC connection reconfiguration with an embedded SCG RRC reconfiguration for the SCG addition (as represented by arrow 1144), resulting in an RRC-connected NRDC state (as represented by block 1146).

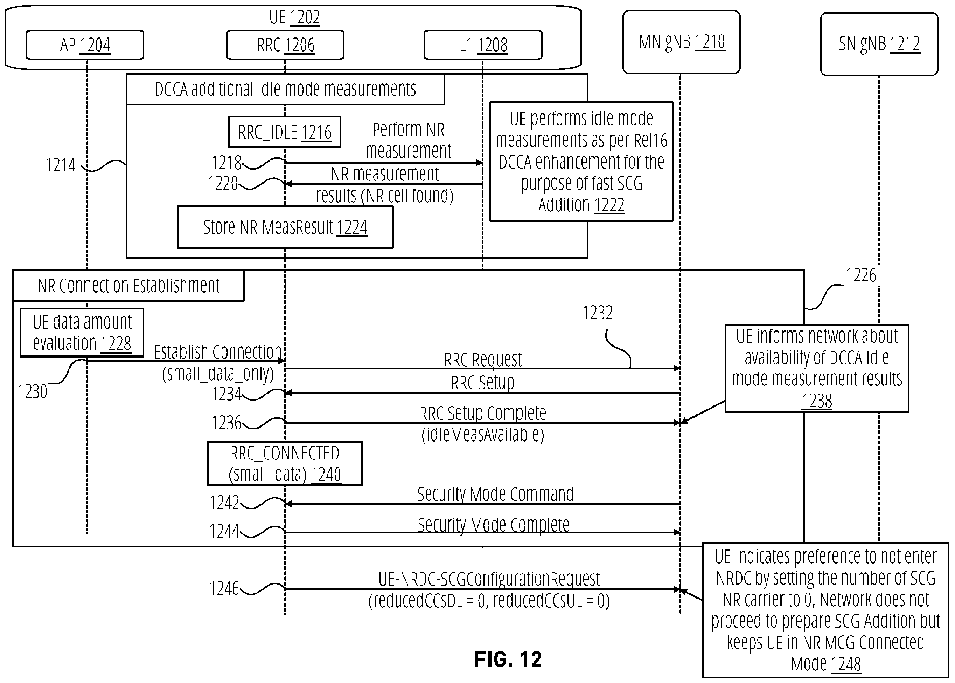

FIG. 12 illustrates a data flowchart using an UE-NRDC- SCGConfigurationRequest message and a DCCA idle mode measurement enhancement. As illustrated, FIG. 12 includes a UE 1202, which includes an AP 1204, an RRC 1206, and an L1 1208, as well as an MN gNB 1210 and an SN gNB 1212. Initially, DCCA idle mode measurements may be performed, as represented by block 1214. While the UE 1202 is in an RRC-idle state (as represented by block 1216), NR measurements may be performed by the UE 1202 (as represented by arrow 1218 and arrow 1220). In particular, such measurements may be performed in idle mode as further discussed in Rel-16 DCCA enhancement for fast SCG additions (as represented by block 1222). In addition, the results of such measurements may be stored, as represented by block 1224.

An NR connection establishment may then be performed, as represented by block 1226. As part of such, a UE data amount evaluation may be performed at the AP 1204 (as represented by block 1228), followed by a connection establishment message (corresponding to small data) from the AP 1204 to the RRC 1206 (as represented by arrow 1230). A series of RRC connection messages may then be communicated via RRC 1206 between the UE 1202 and the MN gNB 1210 (as represented by arrow 1232', arrow 1234, arrow 1236, and block 1240). The RRC connection setup complete message (as represented by arrow 1236) may also include information indicating to the MN gNB 1210 of the availability of DCCA idle mode measurement results (as represented by block 1238). Finally, the NR connection establishment may include security mode communications via RRC 1206 between the UE 1202 and the MN gNB 1210 (as represented by arrow 1242 and arrow 1244).

Once the LTE connection establishment is complete, via RRC 1206, the UE 1202 may send a UE-NRDC-SCGConfigurationRequest to the MN gNB 1210 (as represented by arrow 1246), which may indicate a preference of the UE 1202 to not enter NRDC by setting a number of SCG NR carriers equal to zero. In response, the network may keep the UE in NR MCG connected mode and not prepare an NRDC addition, as represented by block 1248.

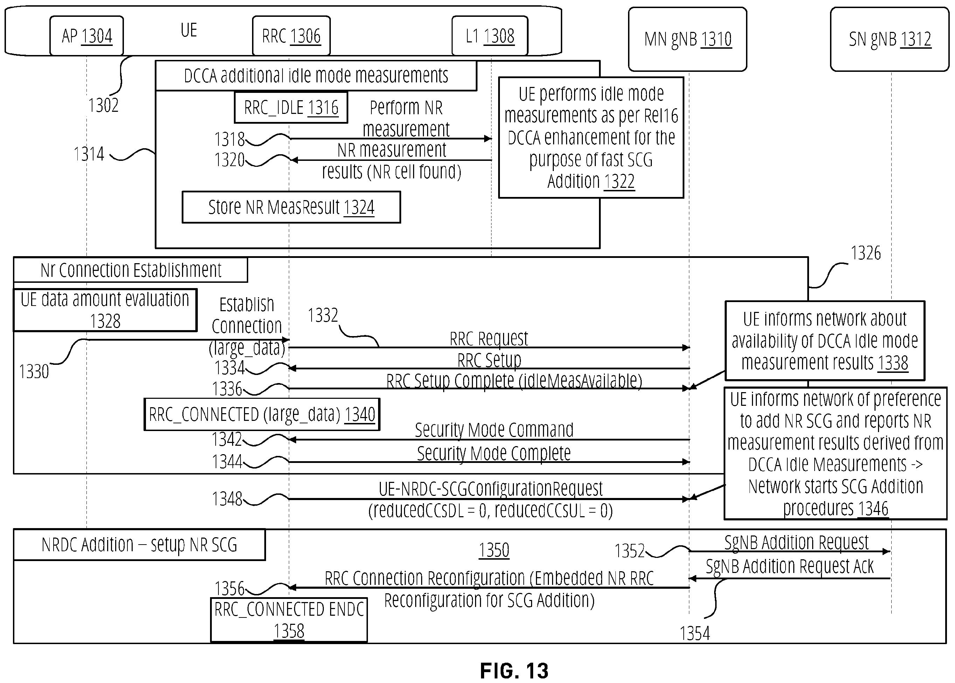

FIG. 13 illustrates a data flowchart using an UE-NRDC- SCGConfigurationRequest message and a DCCA idle mode measurement enhancement. As illustrated, FIG. 13 includes a UE 1302, which includes an AP 1304, an RRC 1306, and an L1 1308, as well as an MN gNB 1310 and an SN gNB 1312. Initially, DCCA idle mode measurements may be performed, as represented by block 1314. While the UE 13 is in an RRC-idle state (as represented by block 1316), NR measurements may be performed by the UE 1302 (as represented by arrow 1318 and arrow 1320). In particular, such measurements may be performed in idle mode as further discussed in Rel-16 DCCA enhancement for fast SCG additions (as represented by block 1322). In addition, the results of such measurements may be stored, as represented by block 1324.

An NR connection establishment may then be performed, as represented by block 1326. As part of such, a UE data amount evaluation may be performed at the AP 1304 (as represented by block 1328), followed by a connection establishment message (corresponding to large data) from the AP 1304 to the RRC 1306 (as represented by arrow 1330). A series of RRC connection messages may then be communicated via RRC 1306 between the UE 1302 and the MN gNB 1310 (as represented by arrow 1332, arrow 1334, arrow 1336, and block 1340). The RRC connection setup complete message (as represented by arrow 1336) may also include information indicating to the MN gNB 1310 of the availability of DCCA idle mode measurement results (as represented by block 1338). Finally, the NR connection establishment may include security mode communications via RRC 1306 between the UE 1302 and the MN gNB 1310 (as represented by arrow 1342 and arrow 1344).

Once the NR connection establishment is complete, via RRC 1306, the UE 1302 may send a UE-NRDC-SCGConfigurationRequest to the MN gNB 1310 (as represented by arrow 1348), which may indicate a preference of the UE 1302 to enter NRDC by setting a number of NR carriers equal to a value greater than zero. In response, the network may setup an NRDC addition, as represented by block 1346 and block 1350. The NRDC addition may include an SgNB addition request from the MN gNB 1310 (as represented by arrow 1352) and an SgNB addition request acknowledgment from the SN gNB 1312 (as represented by arrow 1354). The MN gNB 1310 may then send an RRC connection reconfiguration message with an embedded RRC reconfiguration for the SCG addition (as represented by arrow 1356), which culminates in an RRC-connected NRDC state (as represented by block 1358).

Regarding autonomous measurements discussed throughout this disclosure, the UE may: 1. Maintain a set of carriers to be measured; 2. Perform the measurement without a measurement gap pattern configuration; 3. Apply a UE-specific implementation cell search and measurement period; and 4. Enable and disable the autonomous measurements depending on an applicable scenario of the UE.

Deriving the set of carriers to be measured may include: 1. Upon RRC state transitions: a. Storing the carrier frequency that was used for the PSCell during previous ENDC, NRDC or NEDC sessions in cases of an SCG release; and b. Storing the carrier frequencies previously configured for the purpose of 3GPP Re116 DCCA Idle Mode Measurements upon entering RRC connected mode; and 2. Upon Connected mode mobility: a. The UE receiving the list of carriers in a Measurement Object (MeasObject) configuration within an RRC Reconfiguration message that triggers the handover (or in a separate RRC Reconfiguration message shortly after handover), in which case, the following may be applicable: i. The Network may indicate the carrier configuring MeasObject without linking to MeasId/ReportConfig and without any gap pattern configuration; and ii. The UE may use the MeasObject information for autonomous measurements; and b. The UE acquiring the target cell system information block (SIB) having the Rel-16 DCCA Idle Mode Measurements configuration (i.e., SIB5 in LTE includes the NR carrier list, SIBx in NR includes the NR and LTE carrier lists).

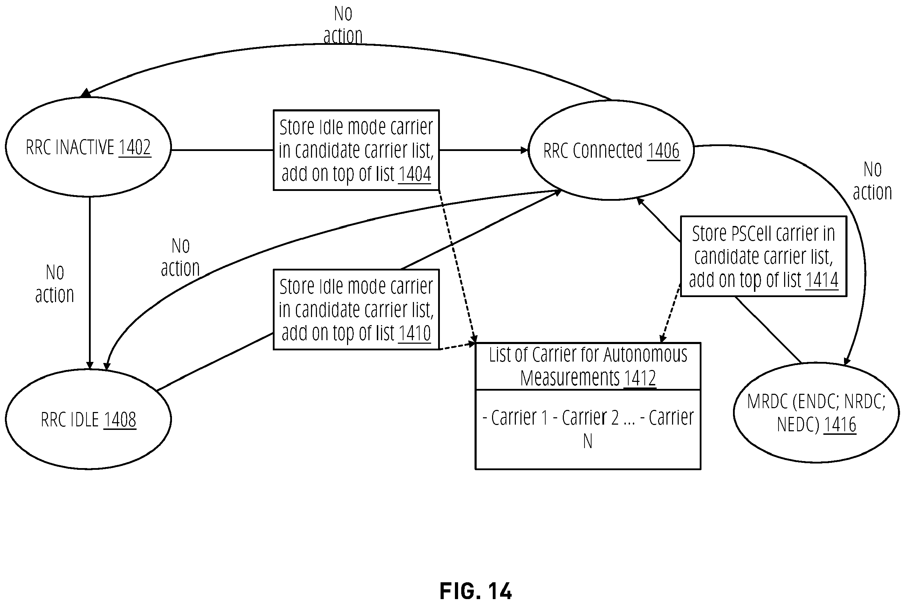

FIG. 14 illustrates a state transition chart for maintaining a carrier list. As illustrated, when transitioning from an RRC inactive state (block 1402) to an RRC connected state (block 1406), the idle mode carrier may be stored at the top of a candidate carrier list (i.e.,block 1412) as represented by block 1404 while transitioning in the opposite direction results in no action being taken. In addition, transitioning from an RRC connected state (block 1406) to an MRDC state (block 1416) results in no action, while the opposite results in storing the PSCell carrier at the top of the candidate carrier list as represented by block 1414). Furthermore, transitioning from an RRC connected state (block 1406) to an RRC idle state (block 1408) results in the idle mode carrier being added to the top of the candidate carrier list (as represented by block 1410), while transitioning in the opposite direction results in no action. Finally transitioning from an RRC inactive state (block 1402) to an RRC idle state (block 1408) results in no action.

Performing the measurements without a measurement gap pattern configuration may include: 1. Using potentially available connected mode DRX gaps of PCell; 2. For EUTRA PCell or NR PCell in FR1, measuring any NR FR2 carrier in a gapless manner; and 3. Using a second/additional RX chain to perform the measurements, as follows: a. When an RX chain has a conflict with a TX of PCell, use TX blanking; or b. Tune away TX for some time to prioritize an additional RX chain.

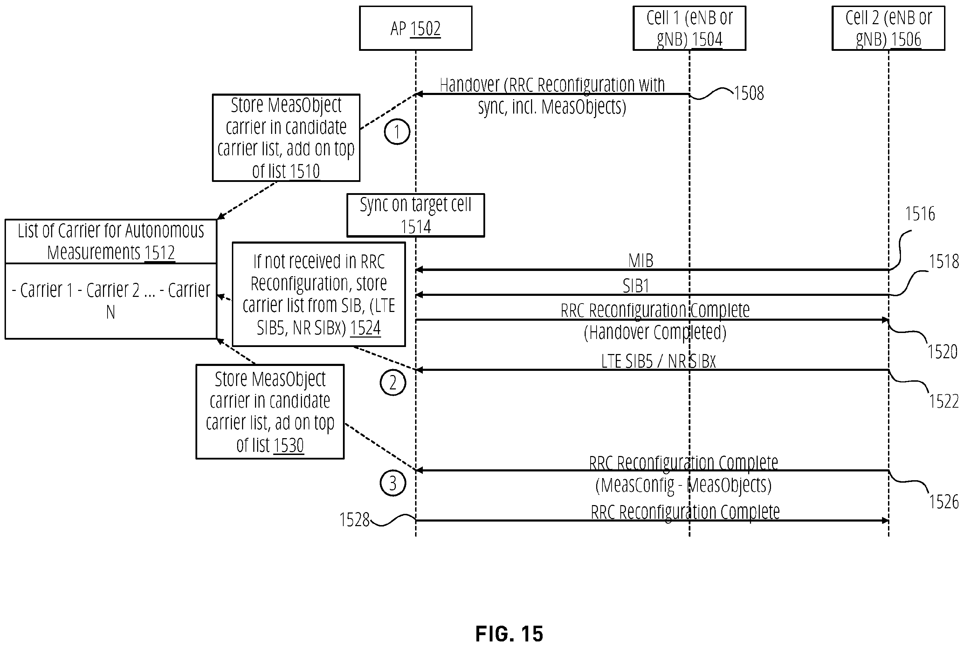

FIG. 15 illustrates a data flowchart for maintaining a carrier list during mobility (e.g., handover). As illustrated, FIG. 15 includes an AP 1502, a Cell 1 1504 (e.g., an eNB or a gNB), and a Cell 2 1506 (e.g., an eNB or a gNB). Cell 1 may transmit a handover RRC reconfiguration message that includes MeasObjects (as represented by arrow 1508). The MeasObject may then be stored at the top of a list of carriers for autonomous measurements 1512 (as represented by block 1510). The AP may then sync on a target cell, as represented by block 1514. Cell 2 1506 may then send a master information block (MIB) and a SIB1 (as represented by arrow 1516 and arrow 1518, respectively). The AP 1502 may then send an RRC reconfiguration/handover complete message to the Cell 2 1506 (as represented by arrow 1520).

Cell 2 1506 may then send a SIB message (e.g., LTE SIB5 or NR SIBx) (as represented by arrow 1522). If such message is not received in an RRC reconfiguration message, the carrier list may be stored from the SIB (as represented by block 1524.

An RRC reconfiguration complete message with MeasObjects may then be sent by the Cell 2 1506 (as represented by arrow 1526). The MeasObject carrier may then be stored at the top of the candidate carrier list (as represented by block 1530). Finally, the AP 1502 may then send an RRC reconfiguration complete message to the Cell 2 1506 (as represented by arrow 1528).

The principles described herein include a method for allowing the communication device to signal to a network if the addition of an SCG is to occur or if the communication device is to connect to the MCG only. In addition, the signaling described herein allows the device to provide a preferred configuration for the SCG. Such preferred configuration may include information related to a balance between maximum achievable data throughput and reduced throughput for power consumption reduction. For instance, such information may include: 1. A maximum number of downlink (DL) and uplink (UL) carrier frequencies to be aggregated within the SCG; 2. A maximum aggregated bandwidth for DL and UL data transfer; 3. A maximum number of multiple-input and multiple-output (MIMO) layers for DL and UL data transfer; 4. A maximum bandwidth part (BWP) for DL and UL data transfer; 5. A UE preferred discontinuous reception (DRX) configuration; and so forth.

As described herein, the communication device can indicate that it does not have to have an SCG for the user data transfer by indicating zero DL and zero UL carrier frequencies. Based on such indication, the network may then decide to not add the SCG, but rather keep the device connected to the MCG only.

In contrast, the communication device can indicate that it has to have the SCG for user data transfer by indicating non-zero DL and UL carrier frequencies. The device may also be able to signal non-zero DL and zero UL carrier frequencies to allow for a DL-only configuration of the SCG. In addition to the number of DL and UL carrier frequencies, the device may scale a maximum data throughput and a resulting power consumption by selecting an aggregated bandwidth, a number of MIMO layers, and a BWP configuration. Accordingly, such information (e.g., aggregated bandwidth, number of MIMO layers, and so forth) may be sent to the network by the device.

The network may be limited to performing the addition of the SGC upon request by the communication device. Additionally, the network may use the provided information to configure the device as per its requested aggregated bandwidth/carrier frequencies, number of MIMO layers, and BWP configuration.

To optimize the configuration of the SCG related to the balance between maximum achievable data throughput and reduced throughput for power consumption reduction, the communication device may: 1. Set the number of DL and UL component carriers. As part of such: a. The number of DL and UL carriers may be set to zero when an SCG Configuration is not to be used; b. The number of DL carriers may be set to a non-zero number and the number of UL carriers may be set to zero for DL only operation; c. The maximum possible throughput may be scaled per device by setting the number of DL and UL carrier (i.e., set the number of DL and UL carrier to the maximum values the device supports to achieve maximum throughput and set less than the maximum number to reduce the power consumption); 2. Set the device preferred maximum aggregated bandwidth for DL and UL per frequency range. As part of such: a. Maximum bandwidth used may be controlled for each frequency range and usage of a particular frequency range may be disabled. Notably, the following may apply: i. A frequency range below 8 gigahertz (GHz) may be defined as FR1 (i.e., a range between 410 megahertz (MHz) and 7125 MHz); and ii. A frequency range above 8 GHz may be defined as FR2 (i.e., a range between 24250 MHz and 52600 MHz); b. The DL and UL bandwidth for FR1 may be set to values larger than zero and the DL and UL bandwidth for FR2 may be set to zero to setup SCG for FR1 only operation. Doing so may avoid FR2 usage in situations where FR2 operation would consume high amounts of power; c. The DL and UL bandwidth for FR2 may be set to values larger than zero and the DL and UL bandwidth for FR1 may be set to zero to setup SCG for FR2 only operation; d. The DL and UL bandwidth for FR1 and FR2 may be set to the maximum values the device supports to achieve maximum throughput; 3. Set the number of MIMO layers for DL and UL per frequency range, including: a. Reducing the number of MIMO layers to a value less than the maximum number of layers supported by the UE to reduce power consumption; or b. Setting the number of MIMO layers to a value equal to the maximum number of layers supported by the UE for FR1 DL, FR1 UL, FR2 DL, and FR2 UL to achieve maximum throughput; 4. Provide a preferred DRX configuration to reduce power consumption in cases where maximum throughput is not to be used by the device; and 5. Use any combination of parameter settings of the items listed above (i.e., 1, 2, 3, and 4) that best suit the communication device.

Signaling may also include neighbor cell measurement results. In particular, the network may have to receive measurement results reported by the device in order to select the correct cells for the SCG. Using current procedures, the network may configure the device to perform measurements on neighbor frequencies and report the measurement results either periodically or in response to particular triggered conditions. However, such measurement procedure can cause a delay for adding the SCG. To avoid such delay, the device may autonomously perform measurements on potential candidate frequencies and stall store the measurement results. Doing such ensures that the device has measurement results available when determining to add the SCG. Once the device signals the desired addition of the SCG, the device may include the measurement results in a corresponding message sent to the network.

The device may determine a list of candidate frequencies for autonomous measurements by performing one or more of the following: 1. Identifying a potential list of frequencies the network has previously provided for performing measurements in idle mode, which may comprise neighbor cell measurements performed before the device establishes a connection for the purpose of transferring data. The UE may use such for connected mode autonomous measurements to prepare for the addition of an SCG; 2. Identification of frequencies used by the device during earlier SCG configurations. For example, such frequencies may be utilized when the device has recently performed an SCG release procedure and is preparing to add an SCG again; and 3. For mobility scenarios when the communication device performs a handover to a different Primary Serving Cell on the MCG, one the follow two options may apply: a. The communication device may read system information and derive the idle mode carrier frequencies to be measured. The communication device may then reuse such information for connected mode when the network supports broadcasting such information; or b. The network may provide the updated information on the list of carrier frequencies in the Handover Command message (i.e., radio resource control (RRC) Reconfiguration in NR and RRC Connection Reconfiguration in evolved universal terrestrial radio access (EUTRA)) or in a separate message after the handover. The message may be transmitted from the new cell to the device.

Furthermore, the communication device may perform the autonomous measurements described above without any network configured measurement gap pattern (i.e., gapless measurements) using the following: 1. Connected mode DRX occasion of the PCell; 2. A EUTRA PCell, or in the case of an NR PCell on FR1, any NR FR2 carrier can perform gapless measurements because FR2 uses a separate RF entity specific to the frequency range; or 3. A second, or any additional available, RX chain to perform the measurements. When the additional RX chain has a conflict with a TX of a PCell, the UE may interrupt transmissions to the cell for short durations to squeeze in autonomous measurements.

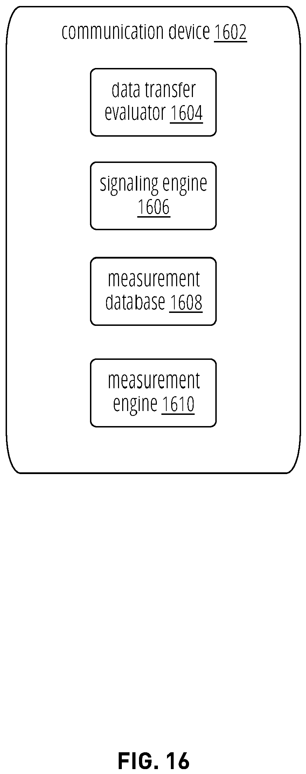

FIG. 16 illustrates a communication device 1602 for practicing the principles described herein. As illustrated, the communication device 1602 includes a data transfer evaluator 1604, a signaling engine 1606, a measurement database 1608, and a measurement engine 1610. The data transfer evaluator 1604 may be configured to determine an amount of data to be transferred, a traffic pattern, and a level of device user interaction to evaluate whether an SCG is to be used for transferring data. The data transfer evaluator 1604 may also determine a configuration for an SCG in terms of frequency layers, MIMO layers and bandwidth. The signaling engine 1606 may be configured to perform signaling to the network to configure the network to add (or not to add) an SCG. The measurement database 1608 may be configured to store neighbor cell measurement results for candidate frequencies and provide such results to the signaling engine 1606. The measurement engine 1610 may be configured to determine frequencies in which the device performs autonomous measurements for preparing a potential SCG addition. The measurement engine 1610 may also be responsible for performing such measurements and providing the measurement results to the measurement database 1608.

Alternative embodiments may also include: 1. Instead of indicating a desire for an SCG addition using a number of aggregated carriers, MIMO layers, and bandwidths, the device may signal data indicating such desires (i.e., an additional SCG) directly to the network. The network may then determine whether to perform the addition of an SCG. In which case, the network may derive a number of aggregated carriers, MIMO layers, and bandwidths. The data transfer evaluator 1604 may derive traffic amounts/patterns. The device may then transfer the evaluation result to the network. One drawback with such an option may be that the device does not control the different SCG configuration parameters, relying on the network to select a correct configuration pattern instead; and/or 2. Instead of defining and implementing new messages between a device and a network for such signaling, existing messages may be extended to include such information. However, doing so may result in dependencies associated with when the device is allowed to send such a message to network, as well as other potential dependencies.

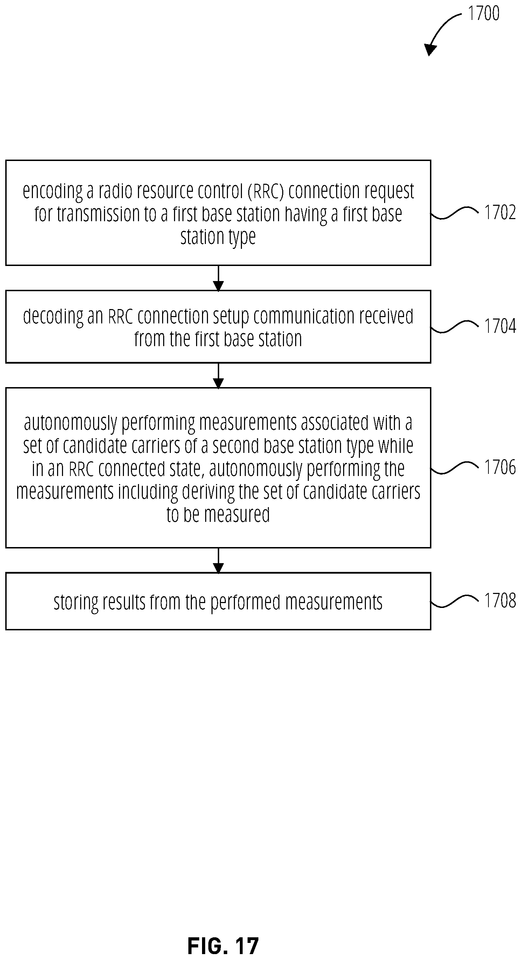

FIG. 17 illustrates a flowchart of a method 1700 for performing autonomous measurements at a UE. At block 1702, the method 1700 includes encoding a radio resource control (RRC) connection request for transmission to a first base station having a first base station type. For instance, the UE 402 may send an RRC request to the eNB 410, as illustrated in FIG. 4 (in addition to being illustrated in various other figures included herein). At block 1704, the method 1700 includes decoding an RRC connection setup communication received from the first base station. For example, the eNB 410 may send an RRC connection setup message to the UE 402.

At block 1706, the method 1700 includes autonomously performing measurements associated with a set of candidate carriers of a second base station type while in an RRC connected state. Autonomously performing the measurements may include deriving the set of candidate carriers to be measured. For instance, the UE 402 may perform autonomous IRAT NR measurements. At block 1708, the method 1700 includes storing results from the performed measurements. In the continuing example of FIG. 4, the UE 402 may store the autonomously performed measurements.

The method 1700 may further include the first base station type comprising an enhanced Node B (eNB) and the second base station type comprising a next generation Node B (gNB). The method 1700 may further include performing a data amount evaluation, and indicating a preference of the UE associated with entering an Evolved Universal Terrestrial Radio Access (EUTRA) New Radio (NR) Dual Connectivity (ENDC) state corresponding to at least one candidate carrier from the set of candidate carriers based on the performed data amount evaluation. The preference may be transmitted to the first base station.

The method 1700 may further include the first base station type comprising a master node (MN) next generation Node B (gNB) and the second base station type comprising a secondary node (SN) gNB. The method 1700 may further include performing a data amount evaluation, and indicating a preference of the UE associated with entering a New Radio dual connectivity (NRDC) state corresponding to at least one candidate carrier from the set of candidate carriers based on the performed data amount evaluation. The preference may be transmitted to the first base station. The method 1700 may further include the autonomous measurements being performed without a measurement gap pattern configuration. The method 1700 may further include the autonomously performing measurements comprising performing measurements without receiving a measurement configuration from a network.

Embodiments contemplated herein include an apparatus comprising means to perform one or more elements of the method 1700. This apparatus may be, for example, an apparatus of a UE (such as a wireless device 1902 that is a UE, as described herein).

Embodiments contemplated herein include one or more non-transitory computer-readable media comprising instructions to cause an electronic device, upon execution of the instructions by one or more processors of the electronic device, to perform one or more elements of the method 1700. This non-transitory computer-readable media may be, for example, a memory of a UE (such as a memory 1906 of a wireless device 1902 that is a UE, as described herein).

Embodiments contemplated herein include an apparatus comprising logic, modules, or circuitry to perform one or more elements of the method 1700. This apparatus may be, for example, an apparatus of a UE (such as a wireless device 1902 that is a UE, as described herein).

Embodiments contemplated herein include an apparatus comprising: one or more processors and one or more computer-readable media comprising instructions that, when executed by the one or more processors, cause the one or more processors to perform one or more elements of the method 1700. This apparatus may be, for example, an apparatus of a UE (such as a wireless device 1902 that is a UE, as described herein).

Embodiments contemplated herein include a signal as described in or related to one or more elements of the method 1700.

Embodiments contemplated herein include a computer program or computer program product comprising instructions, wherein execution of the program by a processor is to cause the processor to carry out one or more elements of the method 1700. The processor may be a processor of a UE (such as a processor(s) 1904 of a wireless device 1902 that is a UE, as described herein). These instructions may be, for example, located in the processor and/or on a memory of the UE (such as a memory 1906 of a wireless device 1902 that is a UE, as described herein).

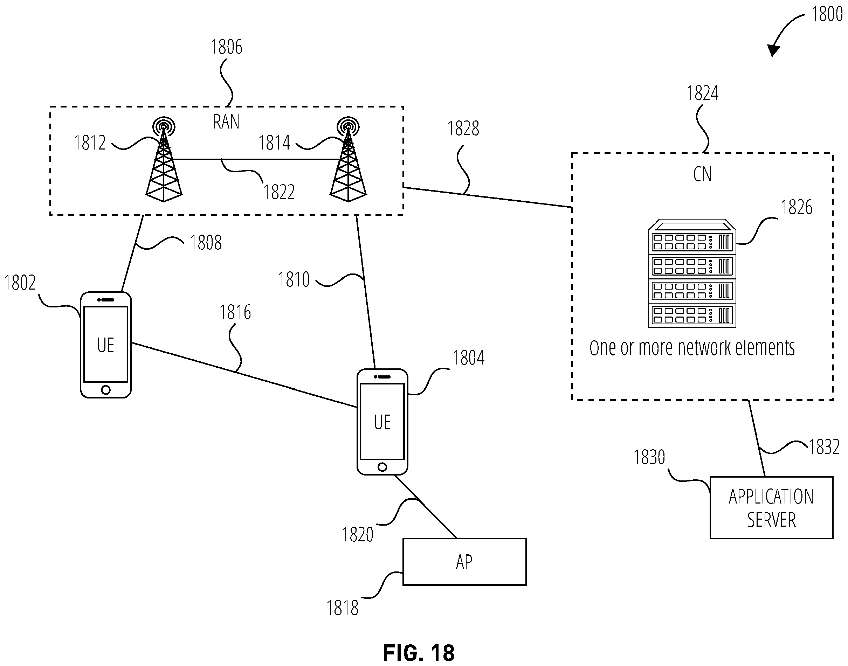

FIG. 18 illustrates an example architecture of a wireless communication system 1800, according to embodiments disclosed herein. The following description is provided for an example wireless communication system 1800 that operates in conjunction with the LTE system standards and/or 5G or NR system standards as provided by 3GPP technical specifications.

As shown by FIG. 18, the wireless communication system 1800 includes UE 1802 and UE 1804 (although any number of UEs may be used). In this example, the UE 1802 and the UE 1804 are illustrated as smartphones (e.g., handheld touchscreen mobile computing devices connectable to one or more cellular networks), but may also comprise any mobile or non-mobile computing device configured for wireless communication.

The UE 1802 and UE 1804 may be configured to communicatively couple with a RAN 1806. In embodiments, the RAN 1806 may be NG-RAN, E-UTRAN, etc. The UE 1802 and UE 1804 utilize connections (or channels) (shown as connection 1808 and connection 1810, respectively) with the RAN 1806, each of which comprises a physical communications interface. The RAN 1806 can include one or more base stations, such as base station 1812 and base station 1814, that enable the connection 1808 and connection 1810.

In this example, the connection 1808 and connection 1810 are air interfaces to enable such communicative coupling, and may be consistent with RAT(s) used by the RAN 1806, such as, for example, an LTE and/or NR.

In some embodiments, the UE 1802 and UE 1804 may also directly exchange communication data via a sidelink interface 1816. The UE 1804 is shown to be configured to access an access point (shown as AP 1818) via connection 1820. By way of example, the connection 1820 can comprise a local wireless connection, such as a connection consistent with any IEEE 802.11 protocol, wherein the AP 1818 may comprise a Wi-Fi^{®} router. In this example, the AP 1818 may be connected to another network (for example, the Internet) without going through a CN 1824.

In embodiments, the UE 1802 and UE 1804 can be configured to communicate using orthogonal frequency division multiplexing (OFDM) communication signals with each other or with the base station 1812 and/or the base station 1814 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 1812 or base station 1814 may be implemented as one or more software entities running on server computers as part of a virtual network. In addition, or in other embodiments, the base station 1812 or base station 1814 may be configured to communicate with one another via interface 1822. In embodiments where the wireless communication system 1800 is an LTE system (e.g., when the CN 1824 is an EPC), the interface 1822 may be an X2 interface. The X2 interface may be defined between two or more base stations (e.g., two or more eNBs and the like) that connect to an EPC, and/or between two eNBs connecting to the EPC. In embodiments where the wireless communication system 1800 is an NR system (e.g., when CN 1824 is a 5GC), the interface 1822 may be an Xn interface. The Xn interface is defined between two or more base stations (e.g., two or more gNBs and the like) that connect to 5GC, between a base station 1812 (e.g., a gNB) connecting to 5GC and an eNB, and/or between two eNBs connecting to 5GC (e.g., CN 1824).

The RAN 1806 is shown to be communicatively coupled to the CN 1824. The CN 1824 may comprise one or more network elements 1826, which are configured to offer various data and telecommunications services to customers/subscribers (e.g., users of UE 1802 and UE 1804) who are connected to the CN 1824 via the RAN 1806. The components of the CN 1824 may be implemented in one physical device or separate physical devices including components to read and execute instructions from a machine-readable or computer-readable medium (e.g., a non-transitory machine-readable storage medium).

In embodiments, the CN 1824 may be an EPC, and the RAN 1806 may be connected with the CN 1824 via an S1 interface 1828. In embodiments, the S1 interface 1828 may be split into two parts, an S1 user plane (S1-U) interface, which carries traffic data between the base station 1812 or base station 1814 and a serving gateway (S-GW), and the S1-MME interface, which is a signaling interface between the base station 1812 or base station 1814 and mobility management entities (MMEs).

In embodiments, the CN 1824 may be a 5GC, and the RAN 1806 may be connected with the CN 1824 via an NG interface 1828. In embodiments, the NG interface 1828 may be split into two parts, an NG user plane (NG-U) interface, which carries traffic data between the base station 1812 or base station 1814 and a user plane function (UPF), and the S1 control plane (NG-C) interface, which is a signaling interface between the base station 1812 or base station 1814 and access and mobility management functions (AMFs).

Generally, an application server 1830 may be an element offering applications that use internet protocol (IP) bearer resources with the CN 1824 (e.g., packet switched data services). The application server 1830 can also be configured to support one or more communication services (e.g., VoIP sessions, group communication sessions, etc.) for the UE 1802 and UE 1804 via the CN 1824. The application server 1830 may communicate with the CN 1824 through an IP communications interface 1832.

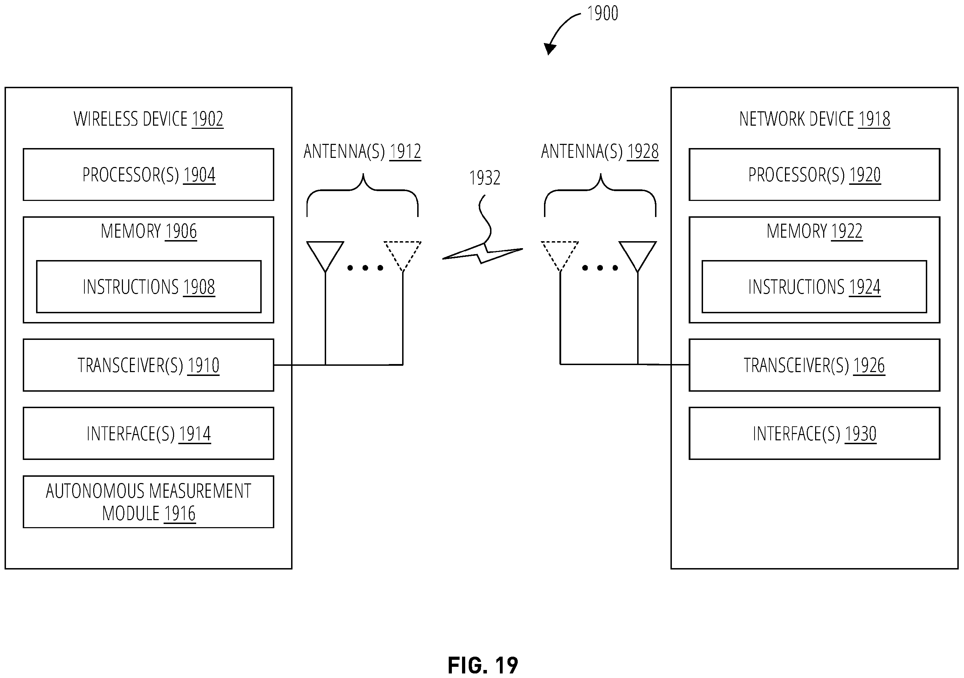

FIG. 19 illustrates a system 1900 for performing signaling 1932 between a wireless device 1902 and a network device 1918, according to embodiments disclosed herein. The system 1900 may be a portion of a wireless communications system as herein described. The wireless device 1902 may be, for example, a UE of a wireless communication system. The network device 1918 may be, for example, a base station (e.g., an eNB or a gNB) of a wireless communication system.

The wireless device 1902 may include one or more processor(s) 1904. The processor(s) 1904 may execute instructions such that various operations of the wireless device 1902 are performed, as described herein. The processor(s) 1904 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 1902 may include a memory 1906. The memory 1906 may be a non-transitory computer-readable storage medium that stores instructions 1908 (which may include, for example, the instructions being executed by the processor(s) 1904). The instructions 1908 may also be referred to as program code or a computer program. The memory 1906 may also store data used by, and results computed by, the processor(s) 1904.

The wireless device 1902 may include one or more transceiver(s) 1910 that may include radio frequency (RF) transmitter and/or receiver circuitry that use the antenna(s) 1912 of the wireless device 1902 to facilitate signaling (e.g., the signaling 1932) to and/or from the wireless device 1902 with other devices (e.g., the network device 1918) according to corresponding RATs.

The wireless device 1902 may include one or more antenna(s) 1912 (e.g., one, two, four, or more). For embodiments with multiple antenna(s) 1912, the wireless device 1902 may leverage the spatial diversity of such multiple antenna(s) 1912 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 1902 may be accomplished according to precoding (or digital beamforming) that is applied at the wireless device 1902 that multiplexes the data streams across the antenna(s) 1912 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 1902 may implement analog beamforming techniques, whereby phases of the signals sent by the antenna(s) 1912 are relatively adjusted such that the (joint) transmission of the antenna(s) 1912 can be directed (this is sometimes referred to as beam steering).

The wireless device 1902 may include one or more interface(s) 1914. The interface(s) 1914 may be used to provide input to or output from the wireless device 1902. For example, a wireless device 1902 that is a UE may include interface(s) 1914 such as microphones, speakers, a touchscreen, buttons, and the like in order to allow for input and/or output to the UE by a user of the UE. Other interfaces of such a UE may be made up of made up of transmitters, receivers, and other circuitry (e.g., other than the transceiver(s) 1910/antenna(s) 1912 already described) that allow for communication between the UE and other devices and may operate according to known protocols (e.g., Wi-Fi^{®}, Bluetooth^{®}, and the like).

The wireless device 1902 may include an Autonomous Measurement module 1916. The Autonomous Measurement module 1916 may be implemented via hardware, software, or combinations thereof. For example, the Autonomous Measurement module 1916 may be implemented as a processor, circuit, and/or instructions 1908 stored in the memory 1906 and executed by the processor(s) 1904. In some examples, the Autonomous Measurement module 1916 may be integrated within the processor(s) 1904 and/or the transceiver(s) 1910. For example, the Autonomous Measurement module 1916 may be implemented by a combination of software components (e.g., executed by a DSP or a general processor) and hardware components (e.g., logic gates and circuitry) within the processor(s) 1904 or the transceiver(s) 1910.

The Autonomous Measurement module 1916 may be used for various aspects of the present disclosure, for example, aspects of FIGS. 4, 5, 11, 14, and 15. The Autonomous Measurement module 1916 is configured to assist the UE in performing autonomous measurements regarding candidate carriers (e.g., NR carriers).

The network device 1918 may include one or more processor(s) 1920. The processor(s) 1920 may execute instructions such that various operations of the network device 1918 are performed, as described herein. The processor(s) 1904 may include one or more baseband processors implemented using, for example, a CPU, a DSP, an ASIC, a controller, an FPGA device, another hardware device, a firmware device, or any combination thereof configured to perform the operations described herein.

The network device 1918 may include a memory 1922. The memory 1922 may be a non-transitory computer-readable storage medium that stores instructions 1924 (which may include, for example, the instructions being executed by the processor(s) 1920). The instructions 1924 may also be referred to as program code or a computer program. The memory 1922 may also store data used by, and results computed by, the processor(s) 1920.

The network device 1918 may include one or more transceiver(s) 1926 that may include RF transmitter and/or receiver circuitry that use the antenna(s) 1928 of the network device 1918 to facilitate signaling (e.g., the signaling 1932) to and/or from the network device 1918 with other devices (e.g., the wireless device 1902) according to corresponding RATs.

The network device 1918 may include one or more antenna(s) 1928 (e.g., one, two, four, or more). In embodiments having multiple antenna(s) 1928, the network device 1918 may perform MIMO, digital beamforming, analog beamforming, beam steering, etc., as has been described.

The network device 1918 may include one or more interface(s) 1930. The interface(s) 1930 may be used to provide input to or output from the network device 1918. For example, a network device 1918 that is a base station may include interface(s) 1930 made up of transmitters, receivers, and other circuitry (e.g., other than the transceiver(s) 1926/antenna(s) 1928 already described) that enables the base station to communicate with other equipment in a core network, and/or that enables the base station to communicate with external networks, computers, databases, and the like for purposes of operations, administration, and maintenance of the base station or other equipment operably connected thereto.

Multi-Radio Dual Connectivity (MR-DC) is a generalization of Intra-E-UTRA Dual Connectivity (DC), where a multiple Rx/Tx capable UE may be configured to utilize resources provided by two different nodes connected via non-ideal backhaul, one providing NR access and the other one providing either E-UTRA or NR access. One node may act as a Master Node (MN) and the other may act as a Secondary Node (SN). The MN and SN may be connected via a network interface, and at least the MN is connected to the core network. The MN and/or the SN may be operated with shared spectrum channel access.

In certain embodiments, functions specified for a UE may be used for an Integrated Access and Backhaul-Mobile Termination (IAB-MT) unless otherwise stated. Similar to UE, the IAB-MT can access the network using either one network node or using two different nodes with E-UTRA-NR Dual Connectivity (EN-DC) and NR-NR Dual Connectivity (NR-DC) architectures. In EN-DC, the backhauling traffic over the E-UTRA radio interface may not be supported. MR-DC may be designed based on the assumption of non-ideal backhaul between the different nodes but can also be used in case of ideal backhaul.

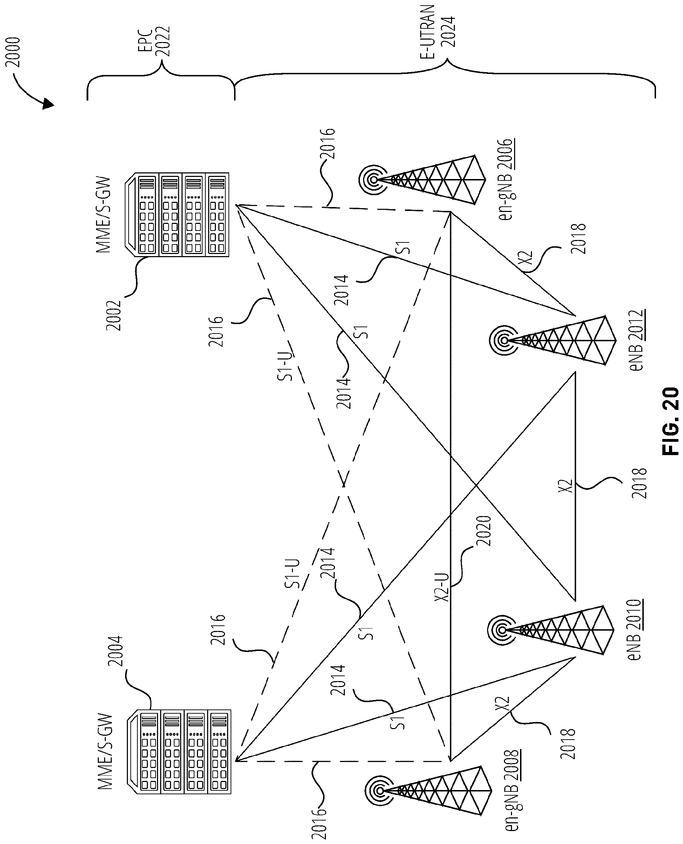

FIG. 20 illustrates an EN-DC architecture 2000 according to embodiments herein. The EN-DC architecture 2000 includes an E-UTRAN 2024 and an EPC 2022. The E-UTRAN 2024 supports MR-DC via EN-DC, in which a UE is connected to one eNB that acts as a MN and one en-gNB that acts as a SN. An en-gNB may be a node that provides NR user plane and control plane protocol terminations towards the UE, and may act as a SN in EN-DC. In FIG. 20, the EPC 2022 may comprise one or more Mobility Management Entity/Serving Gateways (MME/S-GWs), such as an MME/S-GW 2004 and an MME/S-GW 2002. By way of example, the E-UTRAN 2024 may comprise an eNB 2010, an eNB 2012, an en-gNB 2008, and an en-gNB 2006. Each of the eNB 2010 and the eNB 2012 may be connected to the EPC 2022 via one or more S1 interfaces 2014 and to one or more en-gNBs via one or more X2 interfaces 2018. Each of the en-gNB 2008 and the en-gNB 2006 may be connected to the EPC 2022 via one or more S1-U interfaces 2016. The en-gNB 2008 and the en-gNB 2006 may be connected to one another through an X2-U interface 2020.

In certain implementations, NG-RAN supports NG-RAN E-UTRA-NR Dual Connectivity (NGEN-DC), in which a UE is connected to one ng-eNB that acts as a MN and one gNB that acts as a SN.

In certain implementations, NG-RAN supports NR-E-UTRA Dual Connectivity (NE-DC), in which a UE is connected to one gNB that acts as a MN and one ng-eNB that acts as a SN.

In certain implementations, NG-RAN supports NR-NR Dual Connectivity (NR-DC), in which a UE is connected to one gNB that acts as a MN and another gNB that acts as a SN. In addition, NR-DC can also be used when a UE is connected to two gNB-DUs, one serving the MCG and the other serving the SCG, connected to the same gNB-CU, acting both as a MN and as a SN.

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more generalpurpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

Exemplary embodiments of the present disclosure are set out in the following items:
1. A user equipment (UE) comprising:
   a processor; and
   a memory storing instructions that, when executed by the processor, configure the UE to:
      encode a radio resource control (RRC) connection request for transmission to a first base station having a first base station type;
      decode an RRC connection setup communication received from the first base station;
      autonomously perform measurements associated with a set of candidate carriers of a second base station type while in an RRC connected state, autonomously performing the measurements including deriving the set of candidate carriers to be measured; and
      store results from the measurements.
2. The UE of item 1, wherein the first base station type comprising an enhanced Node B (eNB) and the second base station type comprising a next generation Node B (gNB).
3. The UE of item 2, wherein the memory further stores instructions that, when executed by the processor, configure the UE to:
   perform a data amount evaluation; and
   indicate a preference of the UE associated with entering an Evolved Universal Terrestrial Radio Access (EUTRA) New Radio (NR) Dual Connectivity (ENDC) state corresponding to at least one candidate carrier from the set of candidate carriers based on the performed data amount evaluation, the preference being transmitted to the first base station.
4. The UE of any of items 1-3, wherein the first base station type comprising a master node (MN) next generation Node B (gNB) and the second base station type comprising a secondary node (SN) gNB.
5. The UE of item 4, wherein the memory further stores instructions that, when executed by the processor, configure the UE to:
   perform a data amount evaluation; and
   indicate a preference of the UE associated with entering a New Radio dual connectivity (NRDC) state corresponding to at least one candidate carrier from the set of candidate carriers based on the performed data amount evaluation, the preference being transmitted to the first base station.
6. The UE of any of items 1-5, wherein the measurements are performed without a measurement gap pattern configuration.
7. The UE of any of items 1-6, wherein autonomously performing the measurements comprises performing the measurements without receiving a measurement configuration from a network.
8. A method for performing autonomous measurements at a user equipment (UE), the method comprising:
   encoding a radio resource control (RRC) connection request for transmission to a first base station having a first base station type;
   decoding an RRC connection setup communication received from the first base station;
   autonomously performing measurements associated with a set of candidate carriers of a second base station type while in an RRC connected state, autonomously performing the measurements including deriving the set of candidate carriers to be measured; and
   storing results from the measurements.
9. The method of item 8, wherein the first base station type comprising an enhanced Node B (eNB) and the second base station type comprising a next generation Node B (gNB).
10. The method of item 9, the method further comprising:
   performing a data amount evaluation; and
   indicating a preference of the UE associated with entering an Evolved Universal Terrestrial Radio Access (EUTRA) New Radio (NR) Dual Connectivity (ENDC) state corresponding to at least one candidate carrier from the set of candidate carriers based on the performed data amount evaluation, the preference being transmitted to the first base station.
11. The method of any of items 8-10, wherein the first base station type comprising a master node (MN) next generation Node B (gNB) and the second base station type comprising a secondary node (SN) gNB.
12. The method of item 11, the method further comprising:
   performing a data amount evaluation; and
   indicating a preference of the UE associated with entering a New Radio dual connectivity (NRDC) state corresponding to at least one candidate carrier from the set of candidate carriers based on the performed data amount evaluation, the preference being transmitted to the first base station.
13. The method of any of items 8-12, wherein the measurements are performed without a measurement gap pattern configuration.
14. The method of any of items 8-13, wherein autonomously performing the measurements comprises performing the measurements without receiving a measurement configuration from a network.
15. A non-transitory computer-readable storage medium, the computer-readable storage medium including instructions that when executed by a processor of a user equipment (UE), cause the UE to:
   encode a radio resource control (RRC) connection request for transmission to a first base station having a first base station type;
   decode an RRC connection setup communication received from the first base station;
   autonomously perform measurements associated with a set of candidate carriers of a second base station type while in an RRC connected state, autonomously performing the measurements including deriving the set of candidate carriers to be measured; and
   store results from the measurements.
16. The non-transitory computer-readable storage medium of item 15, wherein the first base station type comprising a master node (MN) next generation Node B (gNB) and the second base station type comprising a secondary node (SN) gNB.
17. The non-transitory computer-readable storage medium of item 16, wherein the computer-readable storage medium further includes instructions that when executed by a processor of the UE, cause the UE to:
   perform a data amount evaluation; and
   indicate a preference of the UE associated with entering an Evolved Universal Terrestrial Radio Access (EUTRA) New Radio (NR) Dual Connectivity (ENDC) state corresponding to at least one candidate carrier from the set of candidate carriers based on the performed data amount evaluation, the preference being transmitted to the first base station.
18. The non-transitory computer-readable storage medium of any of items 15-17, wherein the first base station type comprising a master node (MN) next generation Node B (gNB) and the second base station type comprising a secondary node (SN) gNB.
19. The non-transitory computer-readable storage medium of item 18, wherein the computer-readable storage medium further includes instructions that when executed by a processor of the UE, cause the UE to:
   perform a data amount evaluation; and
   indicate a preference of the UE associated with entering an Evolved Universal Terrestrial Radio Access (EUTRA) New Radio (NR) Dual Connectivity (ENDC) state corresponding to at least one candidate carrier from the set of candidate carriers based on the performed data amount evaluation, the preference being transmitted to the first base station.
20. The non-transitory computer-readable storage medium of any of items 15-19, wherein the measurements are performed without a measurement gap pattern configuration.

## Claims

1. A user equipment (UE) comprising:
a processor; and
a memory storing instructions that, when executed by the processor, configure the UE to:
encode a radio resource control (RRC) connection request for transmission to a first base station having a first base station type;
decode an RRC connection setup communication received from the first base station;
autonomously perform measurements associated with a set of candidate carriers of a second base station type while in an RRC connected state, autonomously performing the measurements including deriving the set of candidate carriers to be measured; and
store results from the measurements.

2. The UE of claim 1, wherein the first base station type comprising an enhanced Node B (eNB) and the second base station type comprising a next generation Node B (gNB).

3. The UE of claim 2, wherein the memory further stores instructions that, when executed by the processor, configure the UE to:
perform a data amount evaluation; and
indicate a preference of the UE associated with entering an Evolved Universal Terrestrial Radio Access (EUTRA) New Radio (NR) Dual Connectivity (ENDC) state corresponding to at least one candidate carrier from the set of candidate carriers based on the performed data amount evaluation, the preference being transmitted to the first base station.

4. The UE of any of claims 1-3, wherein the first base station type comprising a master node (MN) next generation Node B (gNB) and the second base station type comprising a secondary node (SN) gNB.

5. The UE of claim 4, wherein the memory further stores instructions that, when executed by the processor, configure the UE to:
perform a data amount evaluation; and
indicate a preference of the UE associated with entering a New Radio dual connectivity (NRDC) state corresponding to at least one candidate carrier from the set of candidate carriers based on the performed data amount evaluation, the preference being transmitted to the first base station.

6. The UE of any of claims 1-5, wherein the measurements are performed without a measurement gap pattern configuration.

7. The UE of any of claims 1-6, wherein autonomously performing the measurements comprises performing the measurements without receiving a measurement configuration from a network.

8. A method for performing autonomous measurements at a user equipment (UE), the method comprising:
encoding a radio resource control (RRC) connection request for transmission to a first base station having a first base station type;
decoding an RRC connection setup communication received from the first base station;
autonomously performing measurements associated with a set of candidate carriers of a second base station type while in an RRC connected state, autonomously performing the measurements including deriving the set of candidate carriers to be measured; and
storing results from the measurements.

9. The method of claim 8, wherein the first base station type comprising an enhanced Node B (eNB) and the second base station type comprising a next generation Node B (gNB).

10. The method of claim 9, the method further comprising:
performing a data amount evaluation; and
indicating a preference of the UE associated with entering an Evolved Universal Terrestrial Radio Access (EUTRA) New Radio (NR) Dual Connectivity (ENDC) state corresponding to at least one candidate carrier from the set of candidate carriers based on the performed data amount evaluation, the preference being transmitted to the first base station.

11. The method of any of claims 8-10, wherein the first base station type comprising a master node (MN) next generation Node B (gNB) and the second base station type comprising a secondary node (SN) gNB.

12. The method of claim 11, the method further comprising:
performing a data amount evaluation; and
indicating a preference of the UE associated with entering a New Radio dual connectivity (NRDC) state corresponding to at least one candidate carrier from the set of candidate carriers based on the performed data amount evaluation, the preference being transmitted to the first base station.

13. The method of any of claims 8-12, wherein the measurements are performed without a measurement gap pattern configuration.

14. The method of any of claims 8-13, wherein autonomously performing the measurements comprises performing the measurements without receiving a measurement configuration from a network.

15. A computer-readable storage medium, the computer-readable storage medium including instructions that when executed by a processor of a user equipment (UE), cause the UE to perform a method as recited in any of claims 8-14.
